(19) Europäisches Patentamt
European Patent Office
Office européen des brevets

(11) **EP 4 270 762 A1**

(12) **EUROPEAN PATENT APPLICATION**
published in accordance with Art. 153(4) EPC

(43) Date of publication:
**01.11.2023 Bulletin 2023/44**

(21) Application number: **20966880.5**

(22) Date of filing: **23.12.2020**

(51) International Patent Classification (IPC):
**H02M 7/12** *(2006.01)*

(52) Cooperative Patent Classification (CPC):
**H02M 7/12;** Y02B 70/10

(86) International application number:
**PCT/JP2020/048176**

(87) International publication number:
**WO 2022/137389 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **TOYODA, Hajime**
**Tokyo 100-8310 (JP)**

(74) Representative: **Meissner Bolte Partnerschaft mbB**
**Widenmayerstrasse 47**
**80538 München (DE)**

(54) **POWER CONVERSION DEVICE**

(57) This power conversion device includes: a reactor (2), switching elements (3a to 3d, 5a to 5d), a first capacitor (6), and a second capacitor (4) provided between an AC power supply (1) and a DC load (7); and a controller (8) for controlling operations of the switching elements (3a to 3d, 5a to 5d). The controller (8) controls voltage of the first capacitor (6) and voltage of the second capacitor (4) to predetermined command values, while, in accordance with load information regarding the DC load (7), performing changeover between a first control method of controlling the switching elements (3a to 3d, 5a to 5d) at a constant switching frequency over an AC cycle of the AC power supply (1), and a second control method of controlling them at a frequency lower than the switching frequency in the first control method.

FIG. 1

EP 4 270 762 A1

**Description**

TECHNICAL FIELD

The present invention relates to a power conversion device.

BACKGROUND ART

In one of conventional power conversion devices, a reactor, an inverter composed of a plurality of switching elements and a capacitor, and a converter composed of a plurality of switching elements and a smoothing capacitor, are connected in series in this order to an AC power supply, and in performing power conversion between AC voltage of the AC power supply and DC voltage of the smoothing capacitor, the switching elements of the inverter and the switching elements of the converter are controlled so that operations of charging and discharging the DC capacitor are performed in one switching cycle of the inverter and the charge amount and the discharge amount become equal to each other (see, for example, Patent Document 1).

In the above conventional power conversion device, switching operations of the switching elements are controlled so that the charge amount and the discharge amount of the DC capacitor become equal to each other in one switching cycle of the inverter, irrespective of a long cycle of the AC power supply. Thus, the charge and discharge amounts are reduced and ripple voltage can be suppressed. As a result, the capacitance required for the DC capacitor is reduced, leading to size reduction of the device.

CITATION LIST

PATENT DOCUMENT

Patent Document 1: Japanese Patent JP 6 129 450 B2

SUMMARY OF THE INVENTION

PROBLEMS TO BE SOLVED BY THE INVENTION

However, in the above conventional technology shown in Patent Document 1, pulse width modulation (PWM) operation is performed at a constant switching frequency over the AC cycle, irrespective of the load state. Therefore, switching loss occurring in the power conversion device and high-frequency loss (iron loss, copper loss) of the reactor, increase, thus causing a problem that circuit efficiency in a low-load range is reduced.

The present invention has been made to solve the above problem, and an object of the present invention is to provide a power conversion device in which the number of times of switching of all of a plurality of switching elements is decreased in accordance with the load state, whereby, as compared to the conventional case, switching loss occurring in the power conversion device and high-frequency loss (iron loss, copper loss) of a reactor are reduced and high efficiency is achieved over a wide range.

SOLUTION TO THE PROBLEMS

A power conversion device according to the present invention includes: at least one reactor, a plurality of switching elements, and a first capacitor, which are provided between an AC power supply and a DC load; a second capacitor provided between the reactor and the first capacitor; and a controller for controlling switching operations of the switching elements. Power conversion is performed between AC voltage of the AC power supply and voltage of the first capacitor.

The controller controls the voltage of the first capacitor and voltage of the second capacitor to be predetermined command values, and meanwhile, in accordance with load information regarding the DC load, performs changeover between a first control method in which the switching elements are controlled at a constant switching frequency over an AC cycle of the AC power supply, and a second control method in which the switching elements are controlled at a frequency lower than the switching frequency in the first control method.

EFFECT OF THE INVENTION

In the power conversion device according to the present invention, the number of times of switching of all of a plurality of switching elements can be decreased in accordance with the load state, whereby switching loss occurring in the power conversion device and high-frequency loss (iron loss, copper loss) of a reactor can be reduced and high efficiency can be achieved over a wide range.

BRIEF DESCRIPTION OF THE DRAWINGS

FIG. 1      is a circuit diagram of a power conversion device according to Embodiment 1.

FIG. 2      is a block diagram of a controller according to Embodiment 1.

FIG. 3A     illustrates a magnitude relationship among AC voltage, voltage of a second capacitor, and voltage of a first capacitor, according to Embodiment 1.

FIG. 3B     illustrates a magnitude relationship among AC voltage, voltage of the second capacitor, and voltage of the first capacitor, according to Embodiment 1.

FIG. 4      shows main operation waveforms in continuous SW operation and switching patterns in respective operation ranges, according to Embodiment 1.

FIG. 5      shows main operation waveforms in simple SW step-up operation and switching patterns in respective operation ranges, according to Embodiment 1.

FIG. 6      shows other main operation waveforms in simple SW step-up operation and switching patterns in respective operation ranges, according to Embodiment 1.

FIG. 7      shows main operation waveforms in simple SW step-down operation and switching patterns in respective operation ranges, according to Embodiment 1.

FIG. 8      shows other main operation waveforms in simple SW step-down operation and switching patterns in respective operation ranges, according to Embodiment 1.

FIG. 9      is a block diagram of a control operation determiner according to Embodiment 1.

FIG. 10     is a block diagram of a second capacitor voltage command value calculator according to Embodiment 1.

FIG. 11     is a block diagram of a second capacitor voltage controller according to Embodiment 1.

FIG. 12     is a block diagram of a continuous SW controller according to Embodiment 1.

FIG. 13A    shows switching patterns in an operation range R1 according to Embodiment 1.

FIG. 13B    shows switching patterns in an operation range R2 according to Embodiment 1.

FIG. 13C    shows switching patterns in an operation range R3 according to Embodiment 1.

FIG. 14A    illustrates operation of a Duty summing unit according to Embodiment 1.

FIG. 14B    illustrates operation of the Duty summing unit according to Embodiment 1.

FIG. 15     is a block diagram of a simple SW step-up controller according to Embodiment 1.

FIG. 16     is a block diagram of a SW carrier calculator A according to Embodiment 1.

FIG. 17     is a block diagram of a simple SW step-down controller according to Embodiment 1.

FIG. 18     is a block diagram of a SW carrier calculator B according to Embodiment 1.

FIG. 19     is a circuit diagram of a power conversion device according to Embodiment 2.

FIG. 20     is a block diagram of a controller according to Embodiment 2.

FIG. 21     is a block diagram of a control operation determiner according to Embodiment 2.

FIG. 22     is a circuit diagram of a power conversion device according to Embodiment 3.

FIG. 23     is a circuit diagram of a power conversion device according to Embodiment 4.

FIG. 24     is a circuit diagram of a power conversion device according to Embodiment 5.

FIG. 25     is a block diagram of a controller according to Embodiment 5.

FIG. 26     shows main operation waveforms in continuous SW operation and switching patterns in respective operation ranges, according to Embodiment 5.

FIG. 27     shows main operation waveforms in simple SW step-up operation and switching patterns in respective operation ranges, according to Embodiment 5.

FIG. 28     shows other main operation waveforms in simple SW step-up operation and switching patterns in respective operation ranges, according to Embodiment 5.

FIG. 29     shows switching patterns in respective operation ranges according to Embodiment 5.

FIG. 30     is a circuit diagram of a power conversion device according to Embodiment 6.

FIG. 31     shows an example of hardware of a controller according to each embodiment.

DESCRIPTION OF EMBODIMENTS

Embodiment 1

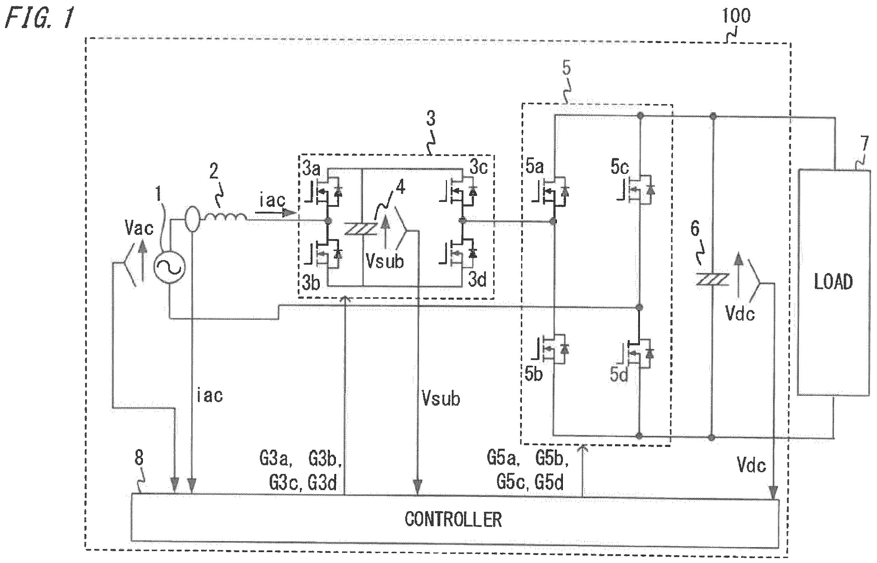

FIG. 1 is a circuit diagram of a power conversion device according to Embodiment 1.

A power conversion device 100 of Embodiment 1 includes a main circuit which converts AC voltage and AC power of a single-phase AC power supply 1 to DC voltage and DC power and outputs the DC voltage and the DC power to a load 7, and a controller 8 which controls the main circuit. The main circuit is configured such that a reactor 2, a single-phase inverter 3, and a single-phase converter 5 are connected in this order between the AC power supply 1 and a first capacitor 6.

The single-phase inverter 3 includes a first leg having a pair of semiconductor switching elements 3a, 3b connected in series, a second leg having a pair of semiconductor switching elements 3c, 3d connected in series, and a second capacitor 4 provided between the first leg and the second leg and connected in parallel to the first leg and the second leg.

The single-phase converter 5 includes a third leg having a pair of semiconductor switching elements 5a, 5b connected in series and a fourth leg having a pair of semiconductor switching elements 5c, 5d connected in series, and the third leg and the fourth leg are connected in parallel to each other.

The reactor 2 is connected between a P bus of the AC power supply 1 and a middle point of the first leg of the single-phase inverter 3. A middle point of the third leg of the single-phase converter 5 and a middle point of the second leg of the single-phase inverter 3 are connected to each other, and a middle point of the fourth leg of the single-phase converter 5 and an N bus of the AC power supply 1 are connected to each other. The first capacitor 6 has a P-side terminal to which the load 7 and upper ends of the third leg and the fourth leg of the single-phase converter 5 are connected, and an N-side terminal to which the load 7 and lower ends of the third leg and the fourth leg of the single-phase converter 5 are connected.

Each of the semiconductor switching elements used in the single-phase inverter 3 and the single-phase converter 5 is preferably an insulated gate bipolar transistor (IGBT) with a diode connected in antiparallel thereto, a metal oxide semiconductor field effect transistor (MOSFET) with a diode connected between the source and the drain, a gallium nitride-high mobility transistor (GaN-HEMT) of a cascode type, or the like.

As a feedback diode, a diode included in the IGBT, the MOSFET, or the GaN-HEMT may be used, or another diode may be externally provided. The load 7 may be a resistor or a storage battery, or may be a motor or a compressor connected via an inverter that is not shown. Each of the first capacitor 6 and the second capacitor 4 may be an aluminum electrolytic capacitor, a film capacitor, or the like.

AC voltage VAC of the AC power supply 1, voltage (hereinafter, may be referred to as output voltage) VDC of the first capacitor 6, and voltage Vsub of the second capacitor 4 are detected by voltage sensors (not shown) and then inputted to the controller 8. Further, AC current iAC of the AC power supply 1 is detected by a current sensor (not shown) and then inputted to the controller 8.

The controller 8 generates gate signals G3a, G3b, G3c, G3d for the single-phase inverter 3 and gate signals G5a, G5b, G5c, G5d for the single-phase converter 5, on the basis of the load information detected by the sensors and inputted (i.e., the above voltage information and current information), to control the power conversion device 100.

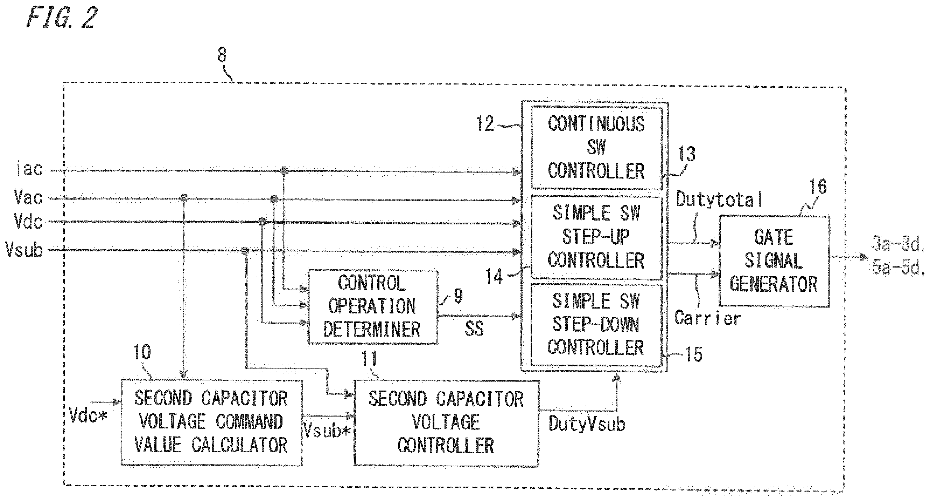

FIG. 2 is a block diagram of the controller according to Embodiment 1.

The controller 8 is composed of a control operation determiner 9, a second capacitor voltage command value calculator 10 (abbreviated as voltage command value calculator 10 in FIG. 2), a second capacitor voltage controller 11 (abbreviated as voltage controller 11 in FIG. 2), a main controller 12, and a gate signal generator 16.

Here, the control operation determiner 9 outputs a control selection signal SelectSignal (abbreviated as SS in FIG. 2) for selecting control operation to be performed by the main controller 12, in accordance with load information, i.e., the magnitude relationship between the AC voltage VAC and the output voltage Vdc, and information of input power calculated from the AC voltage VAC and the AC current iac.

The second capacitor voltage command value calculator 10 calculates and outputs a voltage command value Vsub* for the second capacitor 4 according to the operation state, on the basis of the AC voltage VAC and a voltage command value (hereinafter, may be referred to as output voltage command value) Vdc* for the first capacitor 6.

The second capacitor voltage controller 11 calculates and outputs a control signal DutyVsub for controlling the voltage Vsub of the second capacitor 4 so that the voltage Vsub becomes the voltage command value Vsub*. Hereinafter, a mark * is attached to a command value as a control target.

The main controller 12 is composed of three controllers, i.e., a continuous switching controller 13, a simple switching step-up controller 14, and a simple switching step-down controller 15. In the present invention, switching may be abbreviated as SW, and in particular, the continuous switching controller 13 is abbreviated as continuous SW controller 13, the simple switching step-up controller 14 is abbreviated as simple SW step-up controller 14, and the simple switching step-down controller 15 is abbreviated as simple SW step-down controller 15.

The main controller 12 determines which of the three controllers 13, 14, 15 should be used to perform control, in accordance with the control selection signal SS inputted from the control operation determiner 9. Then, on the basis of the voltage and current information Vac, Vdc, Vsub, iAC detected by the above sensors, and the control signal DutyVsub calculated by the second capacitor voltage controller 11, the main controller 12 generates a duty cycle signal Dutytotal serving for power factor control and voltage control, and a carrier signal Carrier to be compared with the duty cycle signal Dutytotal.

The gate signal generator 16 calculates gate signals from the duty cycle signal Dutytotal and the carrier signal Carrier through pulse width modulation (PWM) control, and outputs gate signals 3a to 3d and 5a to 5d for turning ON/OFF the gates of the semiconductor switching elements 3a to 3d of the single-phase inverter 3 and the semiconductor switching elements 5a to 5d of the single-phase converter 5.

Next, operation of the power conversion device 100 according to Embodiment 1 will be described.

In the power conversion device 100, AC current iAC inputted from the AC power supply 1 is subjected to switching performed by the single-phase inverter 3 and the single-phase converter 5 in coordination with each other, whereby voltage is stepped up or stepped down while the AC current iAC flowing through the reactor 2 is controlled at a high power factor, and the resultant power is smoothed by the first capacitor 6 so that DC power is supplied to the load 7.

In particular, in Embodiment 1, by the continuous SW controller 13, the simple SW step-up controller 14, and the simple SW step-down controller 15 composing the main controller 12, three control operations, i.e., continuous SW control, simple SW step-up control, and simple SW step-down control, are performed.

The continuous SW control by the continuous SW controller 13 corresponds to a first control method in the claims, and the simple SW step-up control by the simple SW step-up controller 14 and the simple SW step-down control by the simple SW step-down controller 15 each correspond to a second control method in the claims.

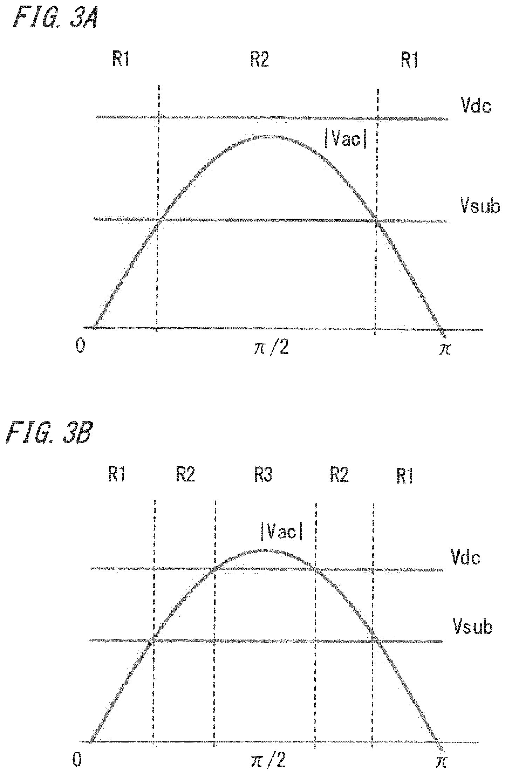

First, the operation outline of each control operation will be described with reference to FIG. 3.

FIGS. 3A and 3B show magnitude relationships among the AC voltage Vac, the voltage Vsub of the second capacitor 4, and the voltage (output voltage) VDC of the first capacitor 6 in the half cycle of a grid. FIG. 3A shows waveforms in step-up operation and FIG. 3B shows waveforms in step-down operation. The power conversion device 100 according to Embodiment 1 has two operation ranges denoted by reference characters R1 and R2 in step-up operation and three operation ranges denoted by reference characters R1, R2, R3 in step-down operation, and operates while performing changeover between switching patterns in the respective ranges. In step-up operation and step-down operation, the same operation is performed in the range denoted by the same reference character.

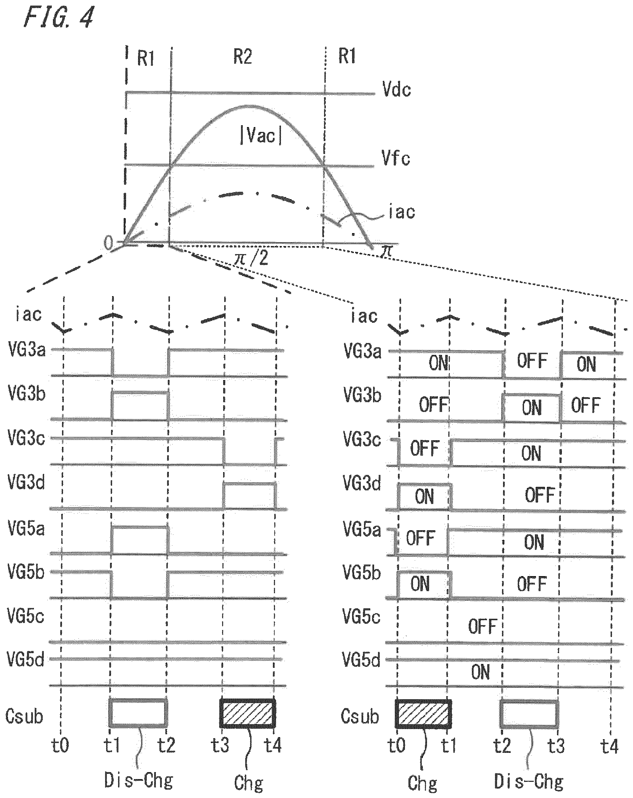

FIG. 4 shows main operation waveforms in continuous SW operation and switching patterns in the respective operation ranges.

In the continuous SW control, operation is performed to drive the gates at a switching frequency of several kHz or higher, and the AC current iAC has a sinusoidal waveform with a power factor close to "1". FIG. 4 shows gate signal waveforms for one switching cycle in the operation range R1 and the operation range R2. In the single-phase inverter 3, the first leg and the second leg perform switching so as to be shifted from each other by a half cycle of the driving cycle. In the single-phase converter 5, the fourth leg does not perform switching and the third leg performs switching. The gate signals for the upper and lower switching elements in each leg are inverted with each other.

Through switching as described above, while the respective switching elements perform switching once, the reactor 2 is excited and neutralized twice and charging and discharging of the second capacitor 4 are each performed once. Thus, the second capacitor 4 is charged and discharged at a time constant of the switching cycle, and therefore can be formed by a small-capacitance capacitor. For the fourth leg of the single-phase converter 5, the gate signal may be turned ON at a timing when the parallel diode conducts current, to perform synchronous rectification operation.

In FIG. 4, VG3a to VG3d denote voltages of the gate signals G3a to G3d to be applied to the gates of the switching elements 3a to 3d of the single-phase inverter 3, and VG5a to VG5d denote voltages of the gate signals G5a to G5d to be applied to the gates of the switching elements 5a to 5d of the single-phase converter 5. In addition, Csub denotes the capacitance of the second capacitor 4, Chg denotes a charging state, and DisChg denotes a discharging state (the same applies to the following figures).

In the continuous SW control, unlike the other two controls, i.e., the simple SW step-up control and the simple SW step-down control, PWM control at several kHz or higher is performed, and thus high step-up operation can be performed. Therefore, the continuous SW control operation is effective in a high load condition having large current or an operation condition requiring a high step-up ratio.

The patterns of the gate signals shown in FIG. 4 are merely an example. The switching patterns may be set such that, while the respective switching elements perform switching once, the reactor 2 is excited and neutralized twice and charging and discharging of the second capacitor 4 are each performed once, without being limited to the switching patterns shown in FIG. 4.

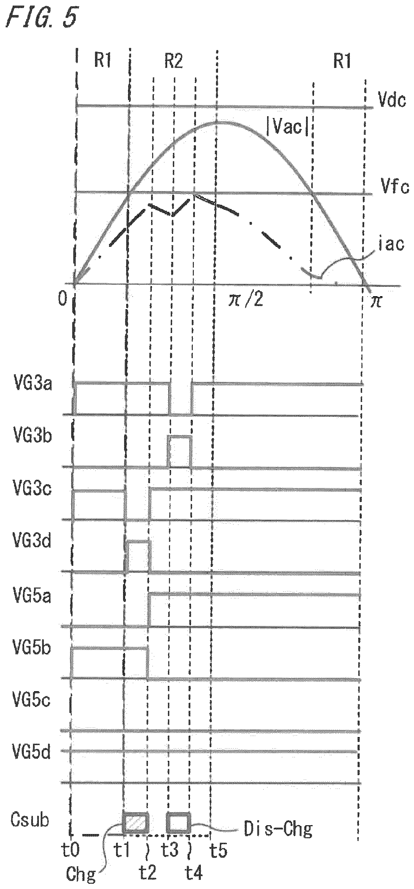

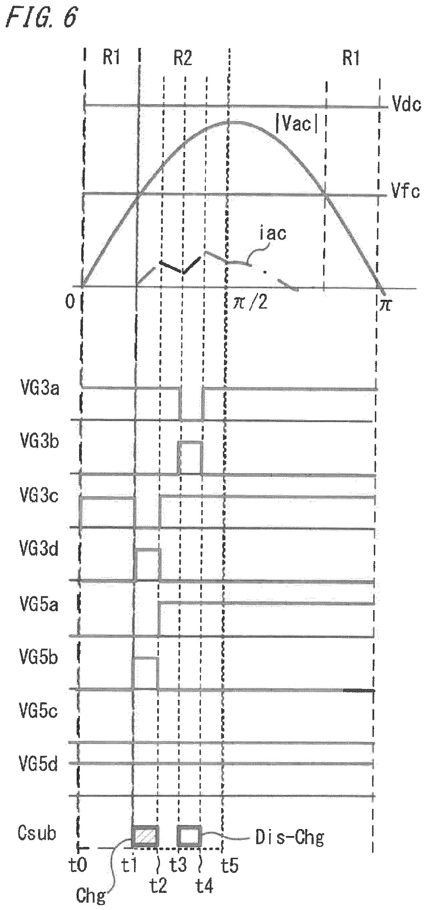

FIG. 5 and FIG. 6 show main operation waveforms in simple SW step-up operation and switching patterns in the respective operation ranges.

In the simple SW step-up control, switching is performed only several times in the half AC cycle. Thus, the number of times of switching is smaller than in the continuous SW control and therefore the power factor is reduced but loss due to high-frequency driving can be significantly reduced. In the simple SW step-up control, operation of performing switching or operation of not performing switching in the operation range R1 is performed in accordance with the input power condition. FIG. 5 shows operation of performing switching in the operation range R1, and FIG. 6 shows operation of not performing switching in the operation range R1.

In a case where power is small, the power factor can be ensured sufficiently with switching in only the operation range R2, but in a case where power is increased, performing switching in only the operation range R2 increases in a current peak, leading to reduction in the power factor and increase in loss.

Also in the simple SW step-up control, the first leg and the second leg of the single-phase inverter 3, and the third leg of the single-phase converter 5, perform switching, the fourth leg does not perform switching, and the gate signals for the upper and lower switching elements in each leg are inverted with each other. As in the case of the continuous SW control, for the fourth leg of the single-phase converter 5, the gate signal may be turned ON at a timing when the parallel diode conducts current, to perform synchronous rectification operation.

In the simple SW step-up control, operation is performed in the operation range R1 and the operation range R2 so as to turn ON each gate signal during such an ON time that the voltage VDC of the first capacitor 6 follows the command value with the number of times of switching designated by a user. After switching is performed the designated number of times, a path connecting the AC power supply 1 and the load 7 is formed so that charging and discharging do not occur in the second capacitor 4, whereby free resonant operation is performed between the reactor 2 and the first capacitor 6.

The patterns of the gate signals shown in FIG. 5 and FIG. 6 are merely an example. The patterns may be set such that, while the respective switching elements perform switching once, the reactor 2 is excited and neutralized twice and charging and discharging of the second capacitor 4 are each performed once, without being limited to the patterns shown in FIG. 5 and FIG. 6.

The number of times of switching set by a user may be any number. As the number of times of switching increases, the power factor comes close to 1 but circuit loss increases, thus having a trade-off relationship.

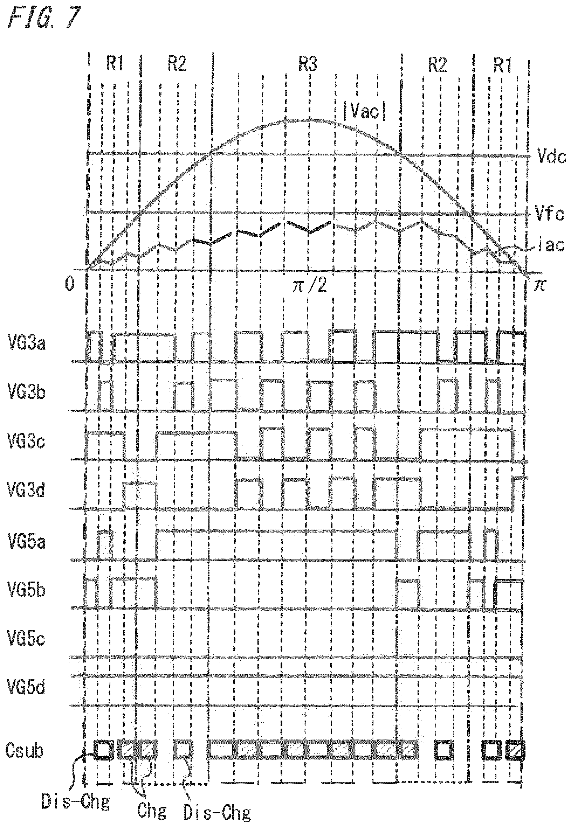

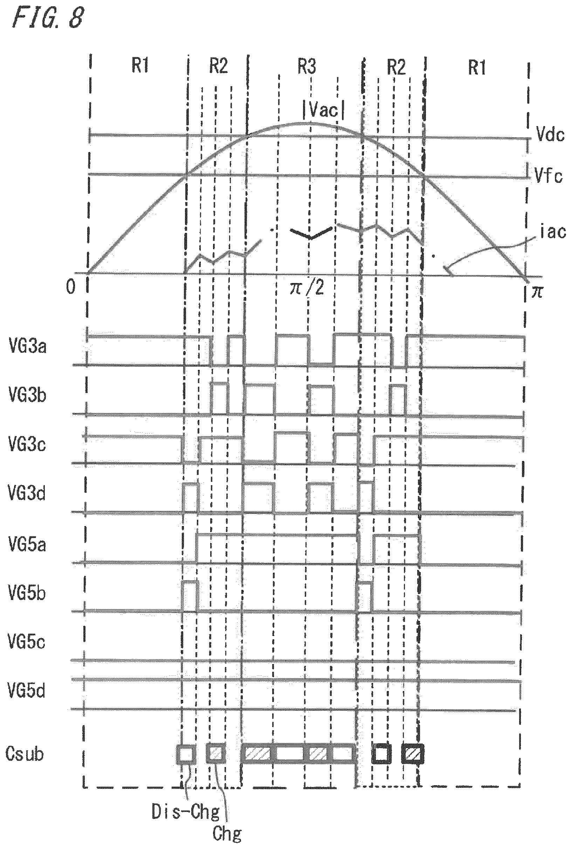

FIG. 7 and FIG. 8 show main operation waveforms in simple SW step-down operation and switching patterns in the respective operation ranges.

In the simple SW step-down control, as in the simple SW step-up control, switching is performed only several times in the half AC cycle. Thus, the number of times of switching is small and therefore loss due to high-frequency driving can be significantly reduced. In addition, in the simple SW step-down control, it is possible to select between operation of performing switching and operation of not performing switching in the operation range R1, in accordance with the step-down ratio of the voltage VDC of the first capacitor 6.

FIG. 7 shows operation of performing switching in the operation range R1, and FIG. 8 shows operation of not performing switching in the operation range R1. In a case where the step-down ratio is small, power factor control and voltage constant control can be performed sufficiently with switching in only the operation range R2, but in a case where the step-down ratio is great, voltage constant control cannot be performed normally with switching in only the operation range R2.

Also in the simple SW step-down control, the first leg and the second leg of the single-phase inverter 3, and the third leg of the single-phase converter 5, perform switching, the fourth leg does not perform switching, and the gate signals for the upper and lower switching elements in each leg are inverted with each other. As in the case of the continuous SW control, for the fourth leg of the single-phase converter 5, the gate signal may be turned ON at a timing when the parallel diode conducts current, to perform synchronous rectification operation.

The simple SW step-down control has the operation range R3, unlike the continuous SW control and the simple SW step-up control. In the operation range R3, under a condition of VAC > VDC > Vsub, operation needs to be performed with such a switching pattern that, while the respective switching elements perform switching once, the reactor 2 is excited and neutralized once and the second capacitor 4 is charged and discharged once.

Therefore, the number of times of switching needs to be doubled as compared to the operation ranges R1 and R2. Thus, in the simple SW step-down control, the total number of times of charging and discharging in the operation range R1 and the operation range R2 needs to be equal to the number of times of charging and discharging in the operation range R3.

In the case of performing switching operation in the operation range R1 as shown in FIG. 7, if switching is performed once in each of the operation range R1 and the operation range R2, the minimum number of times of switching in the half AC cycle is 8, and the number of times that can be set by a user is a multiple of 8.

In the case of not performing switching in the operation range R1 as shown in FIG. 8, the minimum number of times of switching is 4, and the number of times that can be set by a user is a multiple of 4. In the case where the number of times of switching is set to 8 as described above, the switching frequency is 400 Hz and high-frequency loss can be reduced as compared to the case of performing operation in the continuous SW control.

The patterns of the gate signals shown in FIG. 7 and FIG. 8 are merely an example. In the operation range R1 and the operation range R2, the patterns may be set such that, while the respective switching elements perform switching once, the reactor 2 is excited and reset twice and charging and discharging of the second capacitor 4 are each performed once.

The number of times of switching set by a user may be any number that is a multiple of 8 in the case of operation of performing switching in the operation range R1, and may be any number that is a multiple of 4 in the case of operation of not performing switching in the operation range R1. As the number of times of switching increases, the power factor comes close to 1 but circuit loss increases, thus having a trade-off relationship.

Next, the configuration and operation of the controller 8 according to Embodiment 1 will be described.

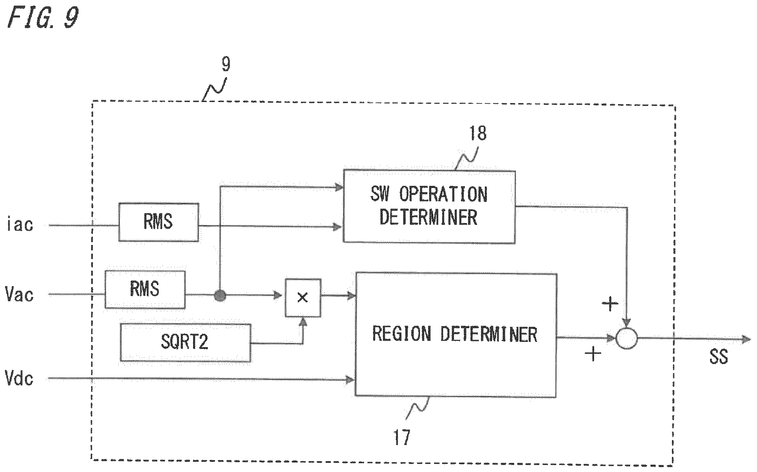

FIG. 9 is a block diagram of the control operation determiner 9.

The control operation determiner 9 receives the AC voltage Vac, the voltage (output voltage) VDC of the first capacitor 6, and the AC current iAC detected by the sensors (not shown). A region determiner 17 of the control operation determiner 9 determines whether the output voltage VDC is to be stepped up or stepped down relative to the AC voltage Vac.

A SW operation determiner 18 calculates operation power of the power conversion device 100 and compares the operation power with a power value set in advance by a user, to determine whether to perform the continuous SW operation control or the simple SW operation control. Then, the control selection signal SelectSignal obtained by summing the above signals is outputted to the main controller 12. In FIG. 9, RMS represents an effective value, and SQRT2 represents a square root of 2.

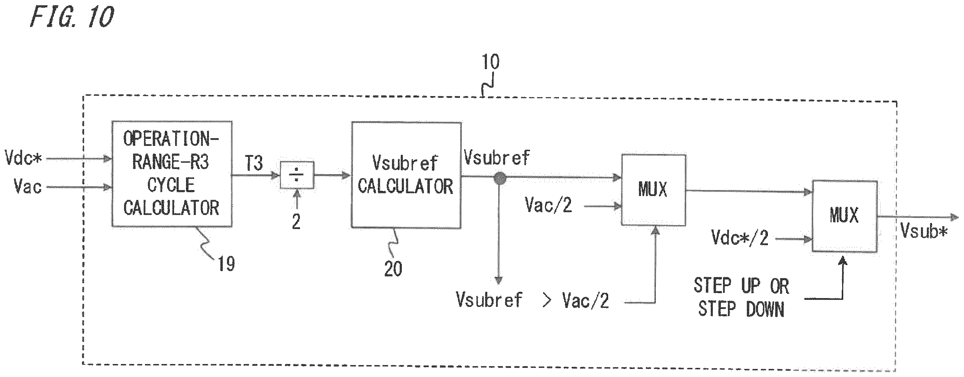

FIG. 10 is a block diagram of the second capacitor voltage command value calculator 10.

The second capacitor voltage command value calculator 10 calculates the voltage command value Vsub* for the second capacitor 4 in accordance with the operation states of the AC voltage VAC and the output voltage command value Vdc*. The relationship between the AC voltage VAC and the output voltage command value Vdc* is as shown in FIG. 3, and is roughly classified into two patterns shown in FIG. 3A and FIG. 3B.

That is, in FIG. 3A, setting is made so as to always satisfy Vsub* = Vdc*/2. In FIG. 3B, on the basis of the magnitude relationship between the AC voltage VAC and the output voltage command value Vdc*, the voltage command value Vsub* for the second capacitor 4 is set so that the period in the operation range R3 and the period in the operation ranges R2 are equal to each other.

In the power conversion device of Embodiment 1, a condition that the output voltage command value Vdc* becomes the same as the effective value of the AC voltage VAC corresponds to a step-down limit. Therefore, a lower limit value of the voltage command value Vsub* for the second capacitor 4 is half the effective value of the AC voltage Vac.

Thus, by variably setting the voltage command value Vsub* for the second capacitor 4 in step-down operation, in operation of performing switching in only the operation range R2 and the operation range R3, the effect of power factor correction can be enhanced as compared to the case of the condition expression Vsub* = Vdc*/2.

In FIG. 10, an operation-range-R3 cycle calculator 19 performs calculation by the following Expression (1). In addition, a Vsubref calculator 20 performs calculation by the following Expression (2). Here, ω is represented as ω = 2π·fac, and fAC is the frequency of the AC power supply. In FIG. 10, ÷ represents a divider, and MUX represents a multiplexer.

$$T3 = 1/\omega \cdot \arcsin(Vdc^*/\sqrt{2}Vac) \qquad \ldots(1)$$

$$Vsubref = Vdc^* - \sqrt{2}Vac \cdot \sin(\omega \cdot T3 \qquad \ldots(2)$$

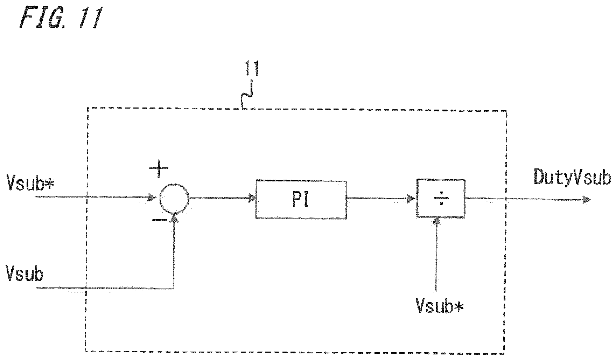

FIG. 11 is a block diagram of the second capacitor voltage controller 11.

The second capacitor voltage controller 11 calculates a deviation between the voltage Vsub of the second capacitor 4 detected by the sensor (not shown) and the voltage command value Vsub* for the second capacitor 4 calculated by the second capacitor voltage command value calculator 10, and performs control so as to follow the voltage command value Vsub* for the second capacitor 4 through proportional integral control (PI control). In FIG. 11, PI represents a proportional integral controller, and ÷ represents a divider.

The main controller 12 is composed of three controllers, i.e., the continuous SW controller 13, the simple SW step-up controller 14, and the simple SW step-down controller 15. While performing changeover among the three control operations on the basis of the control selection signal SelectSignal outputted from the control operation determiner 9, the main controller 12 generates a duty cycle signal Dutytotal corresponding to each control operation and a carrier signal Carrier to be compared with the duty cycle signal Dutytotal, and outputs them to the gate signal generator 16.

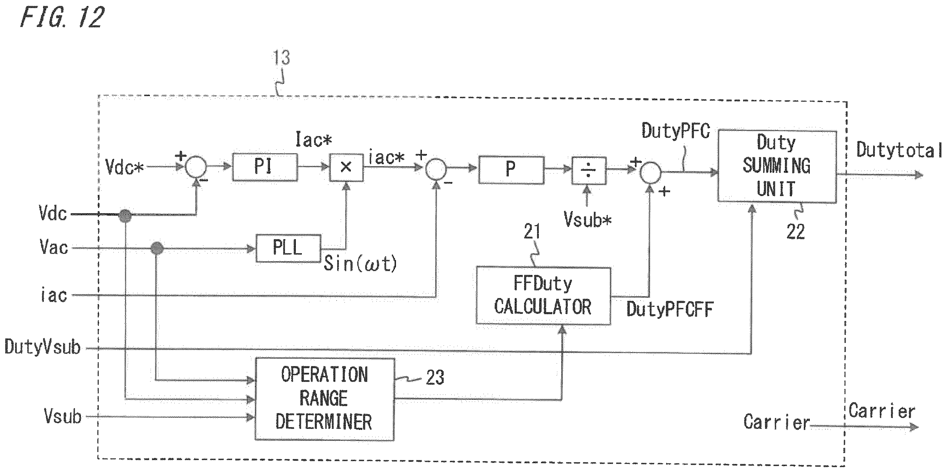

FIG. 12 is a block diagram of the continuous SW controller 13.

The continuous SW controller 13 operates when a signal corresponding to the step-up continuous switching operation is inputted as the control selection signal SelectSignal.

The continuous SW controller 13 calculates a deviation between the detected voltage VDC of the first capacitor 6 and the voltage command value Vdc* for the first capacitor 6, performs proportional integral control (PI control) by a proportional integral controller (PI controller), and outputs an AC current command value Iac*. The AC current command value Iac* is multiplied by a PLL waveform obtained through a phased locked loop (PLL) circuit from the AC voltage Vac, to calculate an instantaneous value iac* of the AC current command value, and a deviation between the instantaneous value iac* and the detected AC current iAC is subjected to proportional control (P control) by a proportional controller (P controller).

Here, a theoretical duty cycle DutyPFCFF calculated by the FFDuty calculator 21 is added, thus calculating a power factor control duty cycle DutyPFC. Then, a Duty summing unit 22 performs addition or subtraction with the control signal DutyVsub calculated and outputted by the second capacitor voltage controller 11, and outputs the result as the duty cycle signal Dutytotal to the gate signal generator 16.

The FFDuty calculator 21 selects an expression for calculation, in accordance with an operation range condition calculated by an operation range determiner 23. In the continuous SW controller 13, the carrier signal Carrier has a fixed value and therefore is a saw-tooth wave or a triangular wave having a frequency set by a user. The FFDuty calculator 21 calculates the theoretical duty cycle DutyPFCFF for such a switching pattern that the AC current iAC is increased and decreased twice and charging and discharging of the second capacitor 4 are each performed once.

By adding feedforward (FF; Feed Forward) control to the control duty, response of high power factor control can be improved. In the power conversion device 100 of Embodiment 1, operation of performing changeover of the control duty in accordance with the operation range is performed. Therefore, it is possible to suppress sharp change in the changeover by adding feedforward control.

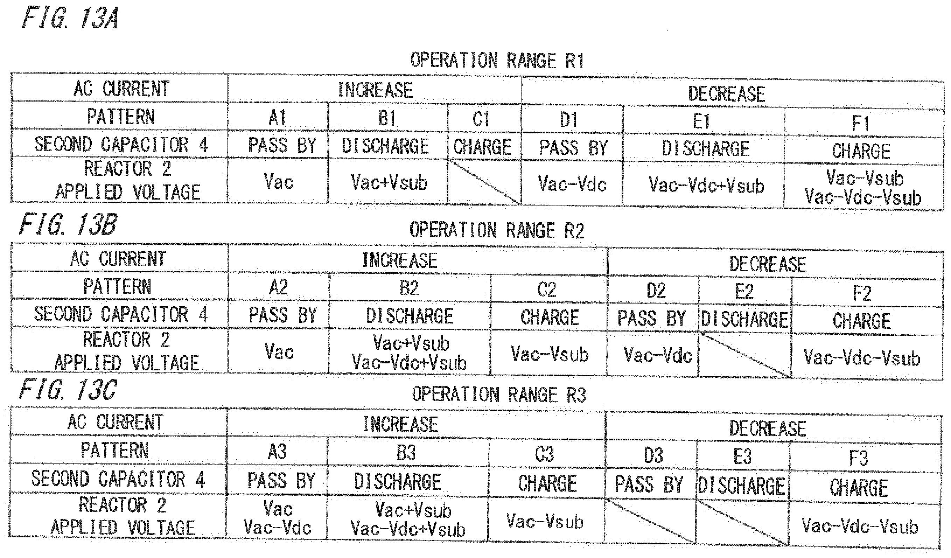

Examples of the theoretical duty cycle DutyPFCFF in the power conversion device 100 of Embodiment 1 are shown in the following Expressions (3) to (6). FIGS. 13A, 13B, and 13C show the switching patterns in the respective operation ranges R1 to R3 in Embodiment 1.

In the operation range R1 in FIG. 13A, there are five patterns A1, B1, D1, E1, F1, and in the operation range R2 in FIG. 13B, there are five patterns A2, B2, C2, D2, F2. In the operation range R3 in FIG. 13C, there are four patterns A3, B3, C3, F3.

Expression (3) corresponds to operation configured by the patterns A1 and E1 in the operation range R1 with reference to FIG. 4, Expression (4) corresponds to operation configured by the patterns A1 and F1 in the operation range R1 with reference to FIG. 4, Expression (5) corresponds to operation configured by the patterns C2 and D2 in the operation range R2 with reference to FIG. 4, and Expression (6) corresponds to operation configured by the patterns B2 and D2 in the operation range R2 with reference to FIG. 4.

It is noted that the switching patterns may be any patterns as long as, in one switching cycle, the AC current iAC is increased and decreased twice and charging and discharging of the second capacitor 4 are each performed once.

$$DutyPFCFF1 = (Vsub - Vac)/Vsub \qquad \ldots(3)$$

$$DutyPFCFF2 = (VDC - VAC - Vsub)/(VDC - Vsub) \qquad \ldots(4)$$

$$DutyPFCFF3 = (VDC - Vac)/Vsub \qquad \ldots(5)$$

$$DutyPFCFF4 = (VDC - Vac)/(VDC - Vsub) \qquad \ldots(6)$$

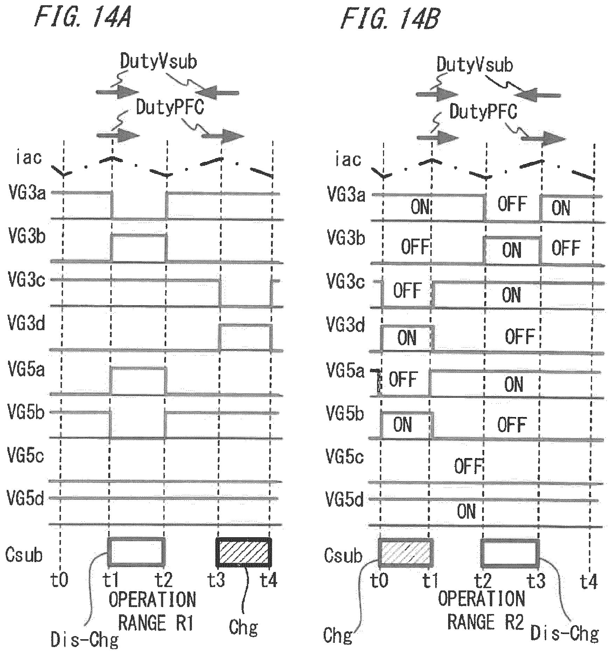

FIG. 14A and FIG. 14B illustrate operation of the Duty summing unit 22 of the continuous SW controller 13 in FIG. 12.

The Duty summing unit 22 performs addition/subtraction of the power factor control duty cycle DutyPFC obtained by the above calculation and the control signal DutyVsub calculated by the second capacitor voltage controller 11, and outputs the result as the duty cycle signal Dutytotal to the gate signal generator 16 at the subsequent stage.

The operation range determiner 23 performs determination about operations of R1 to R3 from the magnitude relationship among the AC voltage Vac, the voltage VDC of the first capacitor 6, and the voltage Vsub of the second capacitor 4 that have been detected, and outputs the resultant signal to the FFDuty calculator 21.

FIG. 14A shows an operation example in the operation range R1, and FIG. 14B shows an operation example in the operation range R2. At timings as shown in these figures, the power factor control duty cycle DutyPFC and the control signal DutyVsub are added/subtracted with each other, whereby, without changing the change amount of DutyPFC in one switching cycle, the charge/discharge amount of the second capacitor 4 is variably set and thus the voltage of the second capacitor 4 can be controlled to be constant.

In the continuous SW control, control is performed with switching operation at a frequency of several kHz or higher. Therefore, the step-up ratio can be increased and thus the voltage VDC of the first capacitor 6 can be stepped up to high voltage. In a case where the load 7 is composed of an inverter, a motor, and a compressor, as the voltage VDC of the first capacitor 6 is increased, the modulation factor of the inverter can be more increased, and loss in the inverter or the motor and the compressor can be reduced, whereby efficiency of the system can be improved.

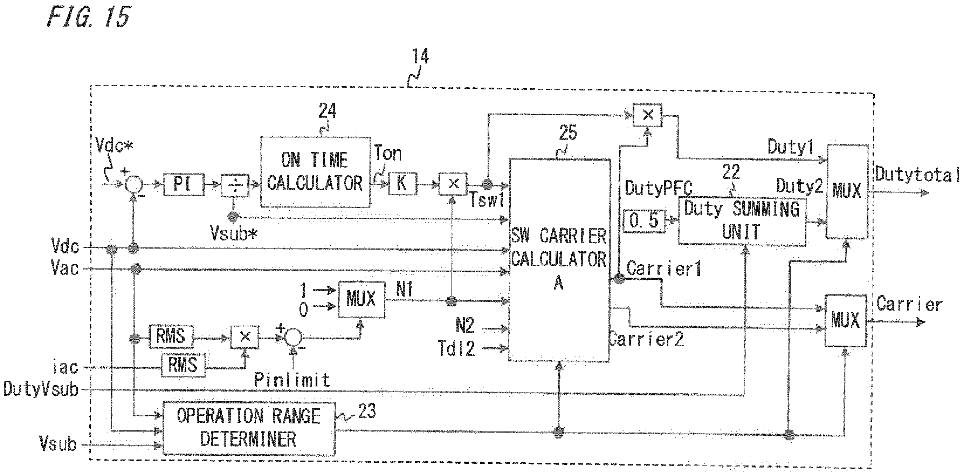

FIG. 15 is a block diagram of the simple SW step-up controller 14.

The simple SW step-up controller 14 operates when a signal corresponding to the step-up simple switching operation is inputted as the control selection signal SelectSignal.

The simple SW step-up controller 14 calculates a deviation between the voltage VDC of the first capacitor 6 detected by the sensor and the voltage command value Vdc* for the first capacitor 6, performs proportional integral control (PI control) by a proportional integral controller (PI controller), and then normalizes the result, thus calculating a duty cycle needed for controlling the output voltage Vdc.

That is, first, an ON time calculator 24 calculates an ON time Ton in the half AC cycle, from the duty cycle, and then the ON time Ton is multiplied by a gain K and the number of times of SW in the operation range R1, to calculate a proportion TSW1 of the operation range R1 in the ON time Ton. Here, the gain K is 0 to 1, and is arbitrarily set by a user in consideration of the power factor. It is noted that the value thereof may be variably set in accordance with a load condition, using a table prepared in advance.

A SW carrier calculator A 25 generates a carrier signal Carrier! for the operation range R1 and a carrier signal Carrier2 for the operation range R2, and outputs them to the gate signal generator 16. The carrier signals Carrier1 and Carrier2 may be saw-tooth waves or triangular waves.

Here, a number N1 of times of switching in the operation range R1 to be inputted to the SW carrier calculator A 25 is determined to be "0" or "1" by a multiplexer (MUX) in accordance with the input power. In a case where the input power is a predetermined value or greater, if switching is not performed in the operation range R1, the power factor is reduced and circuit loss is reduced.

If the number N1 of times of switching is "0", the operation shown in FIG. 6 is performed, and if the number N1 is "1", the operation shown in FIG. 5 is performed. A number N2 of times of switching in the operation range R2 and a delay time Tdl2 are arbitrarily set by a user in consideration of the power factor. It is noted that the values thereof may be variably set in accordance with a load condition, using a table prepared in advance.

In the simple SW step-up control operation, the duty cycle for the operation range R1 can be calculated from a ratio TSW1 of the operation range and the carrier signal Carrier1, and the duty cycle for the operation range R2 is calculated by addition or subtraction of the power factor control duty cycle DutyPFC which is a fixed value 0.5 and the control signal DutyVsub therefor in the Duty summing unit 22, and then outputted as the duty cycle signal Dutytotal to the gate signal generator 16. Operation of the Duty summing unit 22 is the same as that in the continuous SW control. In FIG. 15, MUX represents a multiplexer.

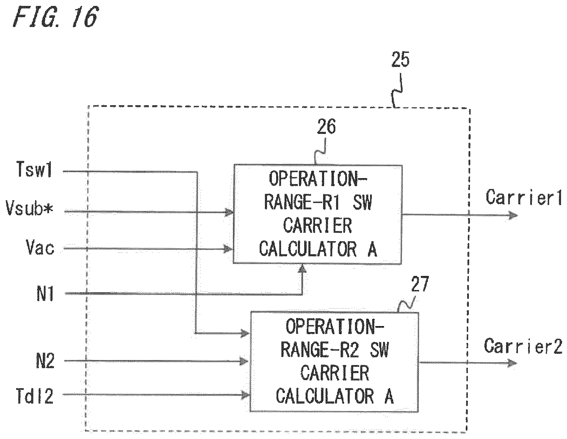

FIG. 16 is a block diagram of the SW carrier calculator A 25 of the simple SW step-up controller 14.

The SW carrier calculator A 25 is composed of an operation-range-R1 SW carrier calculator A 26 and an operation-range-R2 SW carrier calculator A 27. The SW carrier calculator A 25 generates the carrier signal Carrier1 and the carrier signal Carrier2 for the respective operation ranges R1 and R2 on the basis of the numbers N1 and N2 of times of switching for the respective operation ranges R1 and R2 and the switching delay time Tdl2 for the operation range R2.

That is, the operation-range-R1 SW carrier calculator A 26 calculates a switching cycle T1 for the operation range R1, and then changes the cycle into a saw-tooth wave or a triangular wave, which is outputted as the carrier signal Carrier1. The switching cycle T1 is calculated by the following Expression (7). Here, N1 is the number of times of switching to be performed in the operation range R1, and is "0" or "1".

$$T1 = N1/\omega \cdot \arcsin(Vsub^*/\sqrt{2}Vac) \qquad \ldots (7)$$

The operation-range-R2 SW carrier calculator A 27 calculates the switching cycle TSW2 for the operation range R2 by the following Expression (8), and changes the cycle into a SW carrier. Then, the SW carrier to which the delay time Tdl2 for the operation range R2 set by a user is added is outputted as the carrier signal Carrier2. Here, N2 is the number of times of switching to be performed in the operation range R2, and is an integer not less than "1".

$$TSW2 = 2 \cdot (Ton - TSW1)/N2 \qquad \ldots (8)$$

In the simple SW step-up control, the number of times of switching is much smaller than that in the continuous SW operation, and therefore the step-up ratio is reduced. Therefore, this control is selected when the load condition of the power conversion device is a low step-up condition. In addition, in the simple SW step-up control, the number of times of SW in the half AC cycle is only several times. Therefore, loss in the semiconductor elements and the reactor can be significantly reduced.

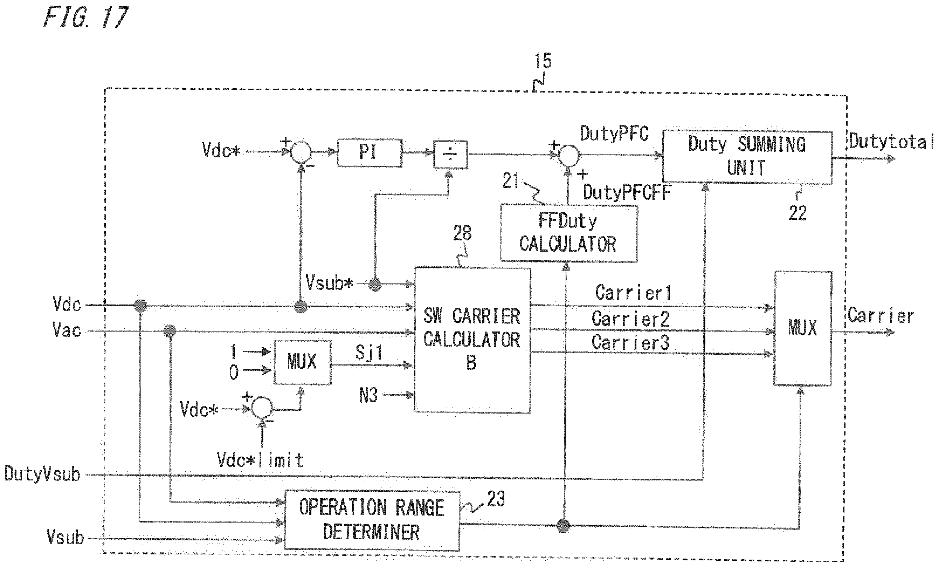

FIG. 17 is a block diagram of the simple SW step-down controller 15.

The simple SW step-down controller 15 operates when a signal corresponding to step-down simple switching operation is inputted as the control selection signal SelectSignal.

The simple SW step-down controller 15 calculates a deviation between the detected voltage VDC of the first capacitor 6 and the voltage command value Vdc* for the first capacitor 6, performs proportional integral control (PI control) by a proportional integral controller (PI controller), and then normalizes the result, thus calculating a duty cycle needed for controlling the output voltage Vdc. Thereafter, as in the continuous SW controller 13, the theoretical duty cycle DutyPFCFF obtained from the FFDuty calculator 21 is added, thus calculating the power factor control duty cycle DutyPFC.

Then, the power factor control duty cycle DutyPFC and the control signal DutyVsub are added/subtracted with each other by the Duty summing unit 22, and the result is outputted as the duty cycle signal Dutytotal to the gate signal generator 16.

Operation of the Duty summing unit 22 is the same as that in the continuous SW controller 13, and therefore the description thereof is omitted.

Using the voltage VDC of the first capacitor 6, the AC voltage Vac, a switching determination signal Sj 1 for the operation range R1 described later, and a number N3 of times of switching in the operation range R3, a SW carrier calculator B 28 calculates carrier signals for the respective operation ranges, and then, using the output signal from the operation range determiner 23, a multiplexer (MUX) outputs the carrier signal Carrier for each operation range to the gate signal generator 16.

Here, the switching determination signal Sj 1 for the operation range R1 is obtained by determining "0" or "1" by a multiplexer (MUX) in accordance with the voltage command value Vdc* for the first capacitor 6, and is used for performing changeover between a mode of performing switching and a mode not performing switching in the operation range R1. In a case where the voltage command value Vdc* is a predetermined value or smaller, if switching is not performed in the operation range R1, voltage constant control is deteriorated.

If the switching determination signal Sj 1 is "0", the operation shown in FIG. 8 is performed, and if the switching determination signal Sj 1 is "1", the operation shown in FIG. 7 is performed. The number N3 of times of switching in the operation range R3 is arbitrarily set by a user in consideration of the power factor. It is noted that the value thereof may be variably set in accordance with a load condition, using a table prepared in advance.

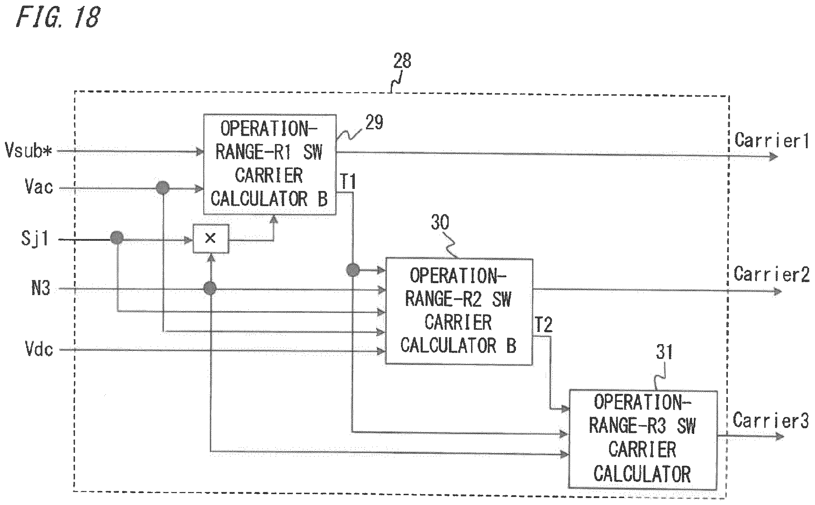

FIG. 18 is a block diagram of the SW carrier calculator B 28 of the simple SW step-down controller 15.

The SW carrier calculator B 28 is composed of an operation-range-R1 SW carrier calculator B 29, an operation-range-R2 SW carrier calculator B 30, and an operation-range-R3 SW carrier calculator 31. The SW carrier calculator B 28 generates the carrier signal Carrier1, the carrier signal Carrier2, and the carrier signal Carrier3 on the basis of the switching determination signal Sj 1 for the operation range R1 and the number N3 of times of switching in the operation range R3.

That is, the operation-range-R1 SW carrier calculator B 29 calculates a cycle T1 and a switching cycle TSW1 for the operation range R1, and then changes the cycle into a saw-tooth wave or a triangular wave, which is outputted as the carrier signal Carrier1. The cycle T1 is calculated by the following Expression (9) and the switching cycle TSW1 is calculated by the following Expression (10).

Here, Sj 1 is the switching determination signal for the operation range R1, and is "0" or "1". N3 is the number of times of switching in the operation range R3, and is an integer that is a multiple of "4" in the case of performing switching in the operation range R1, and an integer that is a multiple of "2" in the case of not performing switching in the operation range R1.

$$T1 = 1/\omega \cdot arcsin(Vsub*/\sqrt{2}Vac) \qquad \ldots(9)$$

$$TSW1 = Sj1 \cdot N3/4 \cdot T1 \qquad \ldots(10)$$

The operation-range-R2 SW carrier calculator B 30 calculates a cycle T2 and a switching cycle TSW2 for the operation range R2, and then changes the cycle into a saw-tooth wave or a triangular wave, which is outputted as the carrier signal Carrier2. The cycle T2 is calculated by the following Expression (11), and the switching cycle TSW2 is calculated by the following Expression (12) or (13). Here, Expression (12) is used when the switching determination signal for the operation range R1 is "1", and Expression (13) is used when the switching determination signal for the operation range R1 is "0".

$$T2 = 1/\omega \cdot arcsin(Vdc/\sqrt{2}Vac) - T1 \qquad (11)$$

$$TSW2 = N3/4 \cdot T2 \qquad \ldots(12)$$

$$TSW2 = N3/2 \cdot T2 \qquad \ldots(13)$$

The operation-range-R3 SW carrier calculator B 31 calculates a switching cycle TSW3 for the operation range R3, and then changes the cycle into a saw-tooth wave or a triangular wave, which is outputted as the carrier signal Carrier3. The switching cycle TSW3 is calculated by the following Expression (14).

$$TSW3 = \{1/(2 \cdot fac) - 2 \cdot (T1 + T2)\}/N3 \qquad \ldots(14)$$

In the simple SW step-down control, as in the simple SW step-up control, the number of times of switching in the half AC cycle is only several times. Therefore, loss in the semiconductor elements and the reactor can be significantly reduced.

The gate signal generator 16 calculates gate pulses from the duty cycle signal Dutytotal and the carrier signal Carrier through pulse width modulation (PWM) control, and outputs gate signals corresponding to each operation range, to the semiconductor switching elements 3a to 3d of the single-phase inverter 3 and the semiconductor switching elements 5a to 5d of the single-phase converter 5.

As described above, in Embodiment 1, in accordance with the load state, operation is performed while selecting from the continuous SW control in which the power factor and voltage are controlled at a constant switching frequency during the half AC cycle, and the simple SW step-up control and the simple SW step-down control in which the power factor and voltage are controlled with only several times of switching during the half AC cycle. Thus, it becomes possible to reduce circuit loss over a wider range as compared to the conventional case while employing the second capacitor 4 having a small capacitance as in the conventional case.

Embodiment 2

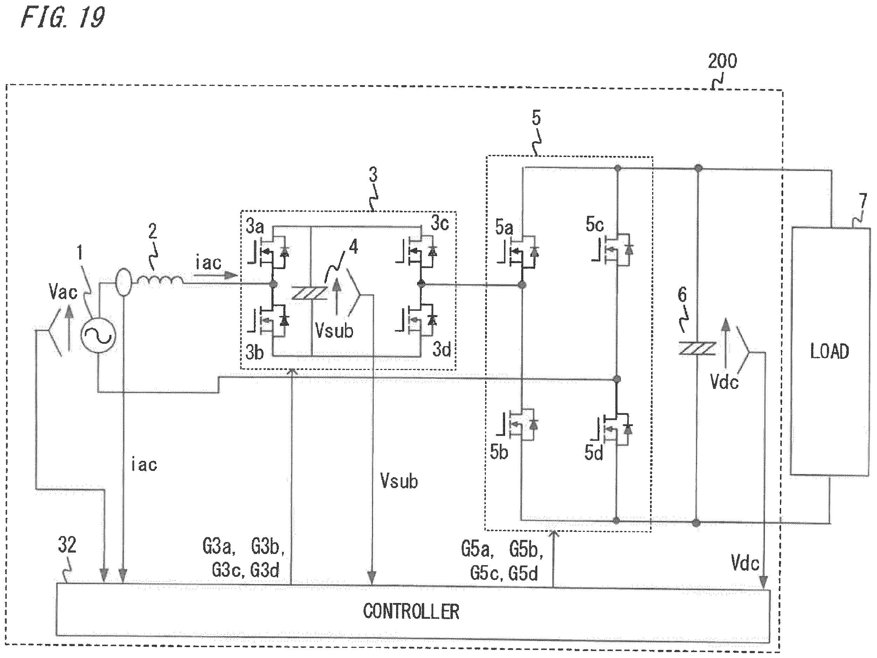

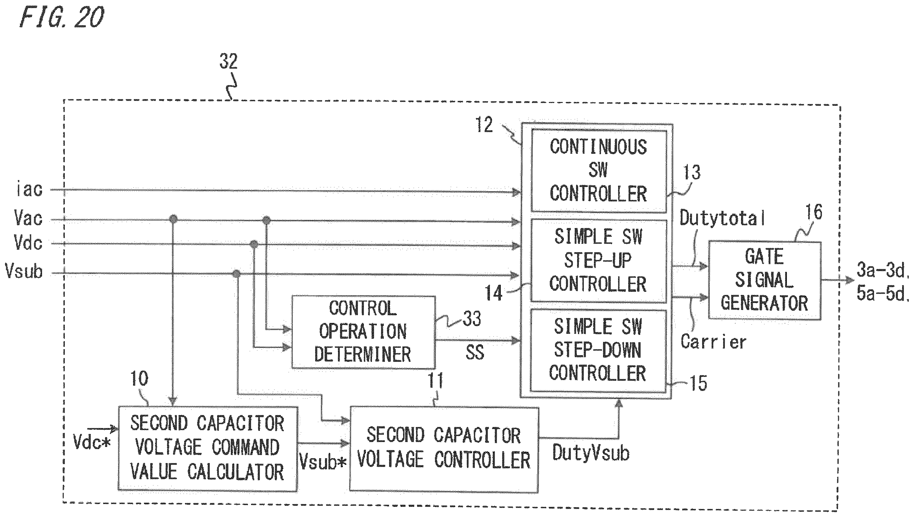

FIG. 19 is a circuit diagram showing a power conversion device 200 according to Embodiment 2, and FIG. 20 is a block diagram of a controller 32 in the power conversion device 200. The components that correspond to or are the same as those in Embodiment 1 are denoted by the same reference characters.

The main circuit configuration of the power conversion device 200 of Embodiment 2 is basically the same as that of the power conversion device 100 of Embodiment 1. Components of the controller 32 are also similar to those of the controller 8 of Embodiment 1, but a control operation determiner 33 of the controller 32 is different from that in Embodiment 1. Therefore, the detailed description of the components other than the control operation determiner 33 is omitted here.

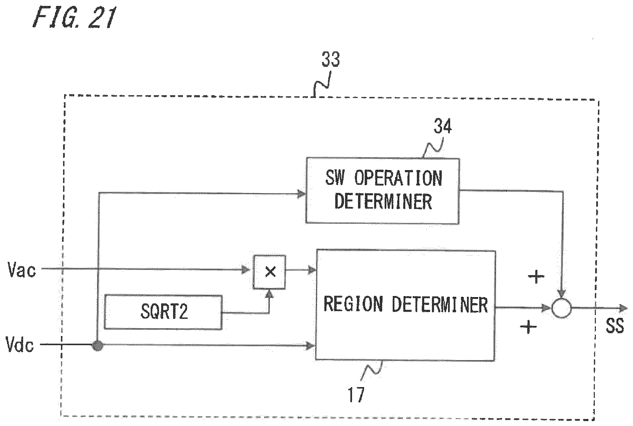

FIG. 21 is a block diagram of the control operation determiner 33.

The control operation determiner 33 outputs a control selection signal SelectSignal (abbreviated as SS in FIG. 21) for selecting control to be performed by the main controller 12, in accordance with the magnitude relationship between the AC voltage VAC and the output voltage Vdc, and the magnitude of the output voltage Vdc.

That is, the control operation determiner 33 receives the AC voltage VAC and the output voltage Vdc, and the region determiner 17 determines whether the output voltage VDC is to be stepped up or stepped down relative to the AC voltage Vac. The SW operation determiner 34 compares the output voltage VDC with a value set in advance by a user, to determine which to perform the continuous SW operation, the simple SW step-down operation, or the simple SW step-up operation. Then, the control selection signal SelectSignal obtained by summing the above signals is outputted to the main controller 12.

Operations of the components other than the control operation determiner 33 are the same as those in Embodiment 1, and therefore the description thereof is omitted here. In addition, main operation of the power conversion device 300 is the same as that of the power conversion device 100 according to Embodiment 1, and therefore the description thereof is omitted.

As described above, in the power conversion device 200 according to Embodiment 2, determination about control operation by the control operation determiner 33 is performed on the basis of the output voltage Vdc, and therefore an advantageous effect can be provided for such a power conversion device that operates with the output voltage VDC variably set under the same power condition.

Embodiment 3

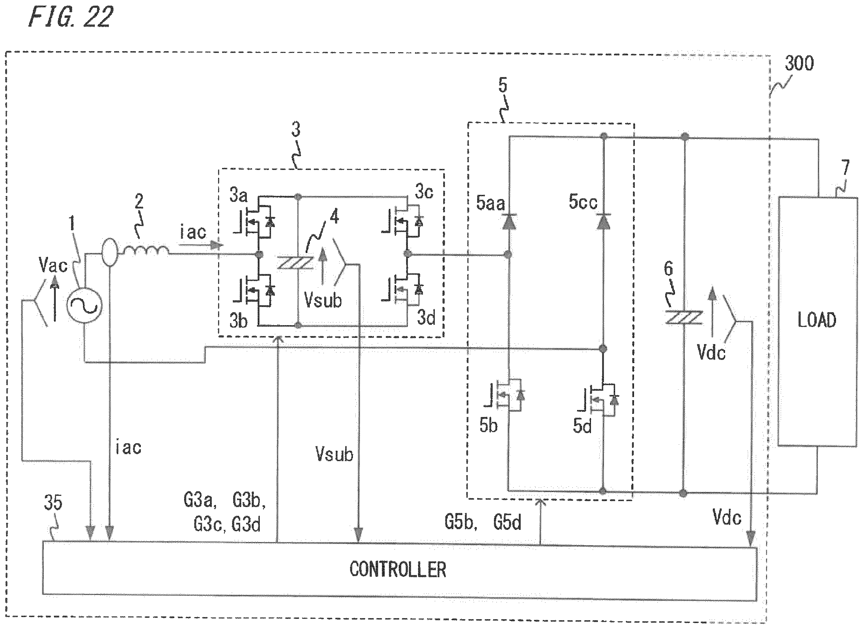

FIG. 22 is a circuit diagram showing a power conversion device 300 according to Embodiment 3. The components that correspond to or are the same as those in Embodiment 1 are denoted by the same reference characters.

The feature of Embodiment 3 is that the configuration of the single-phase converter 5 is different from that in Embodiment 1. That is, the single-phase converter 5 of Embodiment 3 includes the third leg having a diode 5aa and the semiconductor switching element 5b connected in series, and the fourth leg having a diode 5cc and the semiconductor switching element 5d connected in series, and the third leg and the fourth leg are connected in parallel to each other.

A middle point of the third leg of the single-phase converter 5 and a middle point of the second leg of the single-phase inverter 3 are connected to each other, and a middle point of the fourth leg of the single-phase converter 5 and the N bus of the AC power supply 1 are connected to each other. The first capacitor 6 has a P-side terminal to which the load 7 and upper ends of the third leg and the fourth leg of the single-phase converter 5 are connected, and an N-side terminal to which the load 7 and lower ends of the third leg and the fourth leg of the single-phase converter 5 are connected.

As the configuration of the controller 35, the configuration of the controller 8 of the power conversion device 100 according to the above Embodiment 1 may be employed, or the configuration of the controller 32 of the power conversion device 200 according to the above Embodiment 2 may be employed.

The other configurations are the same as those in Embodiment 1 and therefore the detailed description thereof is omitted here. Main operation of the power conversion device 300 is the same as that of the power conversion device 100 according to Embodiment 1. Operation of the controller 35 is the same as that of the controller 8 of Embodiment 1 or the controller 32 of Embodiment 2, and therefore the description thereof is omitted.

As described above, in the power conversion device 300 according to Embodiment 3, since the diodes 5aa and 5cc are used in upper arms of the single-phase converter 5, synchronous rectification operation cannot be performed, but recovery characteristics in switching are improved. Thus, switching loss can be reduced and the circuit can be driven stably.

Embodiment 4

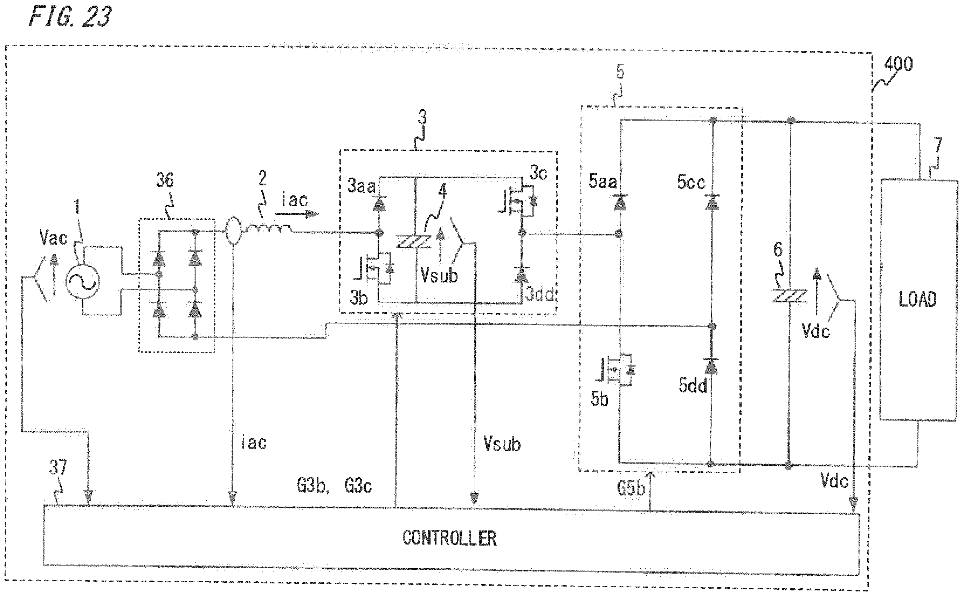

FIG. 23 is a circuit diagram of a power conversion device 400 according to Embodiment 4. The components that correspond to or are the same as those in Embodiment 1 are denoted by the same reference characters.

The power conversion device 400 of Embodiment 4 includes a main circuit which converts AC voltage and AC power of the single-phase AC power supply 1 to DC voltage and DC power and outputs the DC voltage and the DC power to the load 7, and a controller 37. The main circuit is composed of the single-phase inverter 3, the single-phase converter 5, a diode bridge 36, and the reactor 2 which are connected in series to each other between the AC power supply 1 and the first capacitor 6.

The single-phase inverter 3 includes the first leg having a diode 3aa and the semiconductor switching element 3b connected in series, the second leg having the semiconductor switching element 3c and a diode 3dd connected in series, and the second capacitor 4 provided between the first leg and the second leg and connected in parallel to the first leg and the second leg.

The single-phase converter 5 includes the third leg having the diode 5aa and the semiconductor switching element 5b connected in series, and the fourth leg having the diode 5cc and a diode 5dd connected in series, and the third leg and the fourth leg are connected in parallel to each other.

The diode bridge 36 is connected between the AC power supply 1 and the reactor 2. The reactor 2 is connected between an upper output terminal of the diode bridge 36 and a middle point of the first leg of the single-phase inverter 3.

A middle point of the third leg of the single-phase converter 5 and a middle point of the second leg of the single-phase inverter 3 are connected to each other, and a middle point of the fourth leg of the single-phase converter 5 and a lower output terminal of the diode bridge 36 are connected to each other. The first capacitor 6 has a P-side terminal to which the load 7 and upper ends of the third leg and the fourth leg of the single-phase converter 5 are connected, and an N-side terminal to which the load 7 and lower ends of the third leg and the fourth leg of the single-phase converter 5 are connected.

Each of the semiconductor switching elements used in the single-phase inverter 3 and the single-phase converter 5 is preferably an insulated gate bipolar transistor (IGBT) with a diode connected in antiparallel thereto, a metal oxide semiconductor field effect transistor (MOSFET) with a diode connected between the source and the drain, a gallium nitride-high mobility transistor (GaN-HEMT) of a cascode type, or the like. As a feedback diode, a diode included in the IGBT, the MOSFET, or the GaN-HEMT may be used, or another diode may be externally provided.

As the configuration of the controller 37, the configuration of the controller 8 of the power conversion device 100 according to Embodiment 1 may be employed, or the configuration of the controller 32 of the power conversion device 200 according to Embodiment 2 may be employed.

The other configurations are the same as those in Embodiment 1 and therefore the detailed description thereof is omitted here. Main operation of the power conversion device 400 is the same as that of the power conversion device 100 according to Embodiment 1. Operation of the controller 37 is the same as that of the controller 8 of Embodiment 1 or the controller 32 of Embodiment 2, and therefore the description thereof is omitted.

As described above, in the power conversion device 400 according to Embodiment 4, the diode bridge 36 is added, whereby the number of the semiconductor switching elements can be decreased as compared to the above Embodiments 1 to 3. Thus, the circuit can be configured at comparatively low cost.

Embodiment 5

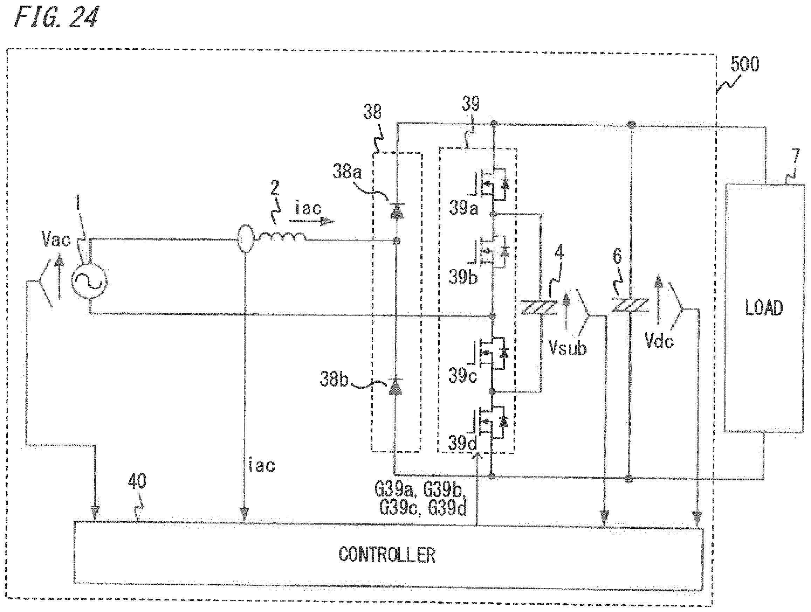

FIG. 24 is a circuit diagram of a power conversion device 500 according to Embodiment 5. The components that correspond to or are the same as those in Embodiment 1 are denoted by the same reference characters.

The power conversion device 500 of Embodiment 5 is composed of a main circuit which converts AC voltage and AC power of the single-phase AC power supply 1 to DC voltage and DC power and outputs the DC voltage and the DC power to the load 7, and a controller 40.

The main circuit is configured such that, between the AC power supply 1 and the first capacitor 6, the reactor 2, a diode rectification leg 38, and a multilevel driving leg 39 are connected in this order and the second capacitor 4 is provided.

The diode rectification leg 38 has a pair of diodes 38a and 38b connected in series. The multilevel driving leg 39 has four semiconductor switching elements 39a to 39d connected in series. The second capacitor 4 is connected between a connection point between the pair of semiconductor switching elements 39a and 39b and a connection point between the pair of semiconductor switching elements 39c and 39d.

The reactor 2 is connected between the P bus of the AC power supply 1 and a middle point of the diode rectification leg 38. An upper end of the diode rectification leg 38 and an upper end of the multilevel driving leg 39 are connected to the P-side terminal of the first capacitor 6, and a lower end of the diode rectification leg 38 and a lower end of the multilevel driving leg 39 are connected to the N-side terminal of the first capacitor 6.

The N bus of the AC power supply 1 is connected to a connection point between the pair of semiconductor switching elements 39a and 39b in the upper arm and the pair of semiconductor switching elements 39c and 39d in the lower arm of the multilevel driving leg 39.

Each of the semiconductor switching elements 39a to 39d used in the multilevel driving leg 39 is preferably an insulated gate bipolar transistor (IGBT) with a diode connected in antiparallel thereto, a metal oxide semiconductor field effect transistor (MOSFET) with a diode connected between the source and the drain, a gallium nitride-high mobility transistor (GaN-HEMT) of a cascode type, or the like. As a feedback diode, a diode included in the IGBT, the MOSFET, or the GaN-HEMT may be used, or another diode may be externally provided.

The AC voltage VAC of the AC power supply 1, the voltage VDC of the first capacitor 6, and the voltage Vsub of the second capacitor 4 are detected by voltage sensors (not shown) and then inputted to the controller 40. Further, the AC current iAC of the AC power supply 1 is detected by a current sensor (not shown) and then inputted to the controller 40.

The controller 40 generates gate signals G39a, G39b, G39c, G39d for the multilevel driving leg 39 on the basis of the load information (voltage information and current information) detected by the sensors and inputted, to control the power conversion device 500.

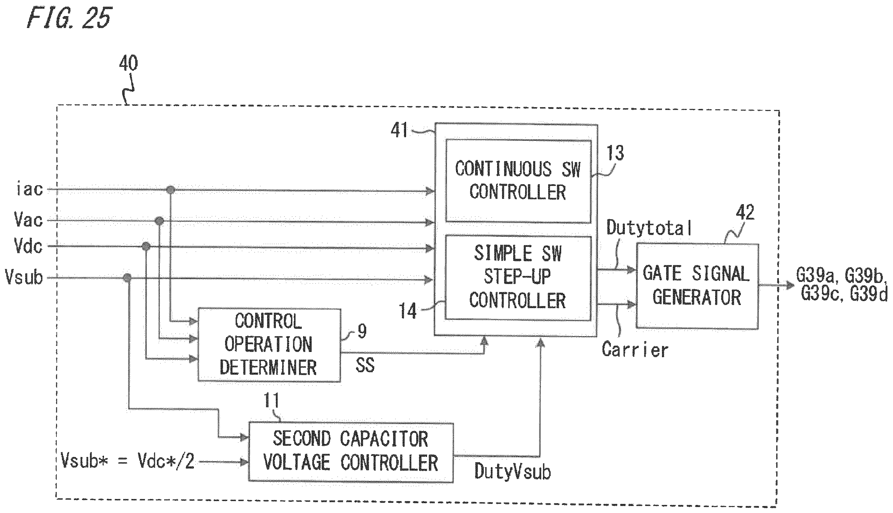

FIG. 25 is a block diagram of the controller according to Embodiment 5. The components that correspond to or are the same as those in Embodiment 1 are denoted by the same reference characters.

The controller 40 is composed of the control operation determiner 9, the second capacitor voltage controller 11, a main controller 41, and the gate signal generator 16.

Here, the main controller 41 is composed of two controllers, i.e., the continuous SW controller 13 and the simple SW step-up controller 14. The main controller 41 determines which of the two controllers 13, 14 should be used to perform control, in accordance with the signal SelectSignal (abbreviated as SS in the drawing) inputted from the control operation determiner 9.

Then, on the basis of the voltage and current information Vac, Vdc, Vsub detected by the above sensors and the control signal DutyVsub calculated by the second capacitor voltage controller 11, the main controller 41 generates a duty cycle signal Dutytotal serving for power factor control and voltage control, and a carrier signal Carrier to be compared with the duty cycle signal Dutytotal.

The gate signal generator 42 calculates gate signals from the duty cycle signal Dutytotal and the carrier signal Carrier through pulse width modulation (PWM) control, and outputs gate signals for turning ON/OFF the gates of the semiconductor switching elements 39a to 39d of the multilevel driving leg 39.

Next, operation of the power conversion device 500 according to Embodiment 5 will be described.

In the power conversion device 500, AC current iAC inputted from the AC power supply 1 is subjected to switching performed by the multilevel driving leg 39, whereby voltage is stepped up while the AC current iAC flowing through the reactor 2 is controlled at a high power factor, and the resultant power is smoothed by the first capacitor 6 so that DC power is supplied to the load 7.

In Embodiment 5, unlike the case of Embodiment 1, two control operations, i.e., continuous SW control and simple SW step-up control, are performed by the main controller 41. Therefore, the voltage relationship is represented by only FIG. 3A. In Embodiment 5, since step-down operation is not present, the voltage command value Vsub* for the second capacitor 4 always satisfies a relationship of Vsub* = Vdc*/2.

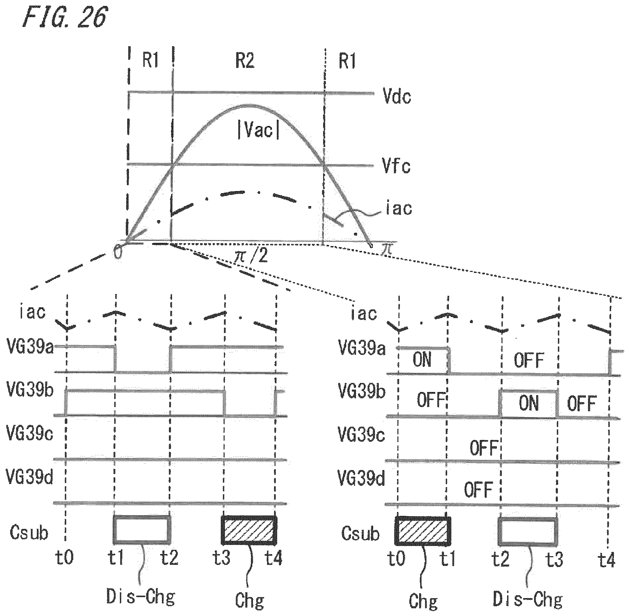

FIG. 26 shows main operation waveforms in the continuous SW operation and switching patterns in the respective operation ranges.

In the continuous SW control, operation is performed to drive the gates at a switching frequency of several kHz or higher, and the AC current iAC has a sinusoidal waveform with a power factor close to "1". FIG. 26 shows gate signal waveforms for one switching cycle in the operation range R1 and the operation range R2.

In FIG. 26, in the positive half cycle, the semiconductor switching elements 39a and 39b in the upper arm of the multilevel driving leg 39 perform switching, and the semiconductor switching elements 39c and 39d in the lower arm are operated so that the parallel diodes conduct current. In the negative half cycle, operations of the semiconductor switching elements 39a and 39b in the upper arm and operations of the semiconductor switching elements 39c and 39d in the lower arm are inverted with each other relative to the case of the positive half cycle. The semiconductor switching element may be turned ON when the parallel diode conducts current, to perform synchronous rectification operation.

Through switching of the semiconductor switching elements 39a to 39d in the multilevel driving leg 39 as described above, while the respective elements perform switching once, the reactor 2 is excited and neutralized twice and charging and discharging of the second capacitor 4 are each performed once. Thus, the second capacitor 4 is charged and discharged at a time constant of the switching cycle, and therefore can be formed by a small-capacitance capacitor. The effects of the continuous SW control are as described in the above Embodiment 1, and therefore the description thereof is omitted.

The patterns of the gate signals shown in FIG. 26 are merely an example. The patterns may be set such that, while the respective semiconductor switching elements 39a to 39d perform switching once, the reactor 2 is excited and neutralized twice and charging and discharging of the second capacitor 4 are each performed once, without being limited to the patterns shown in FIG. 26.

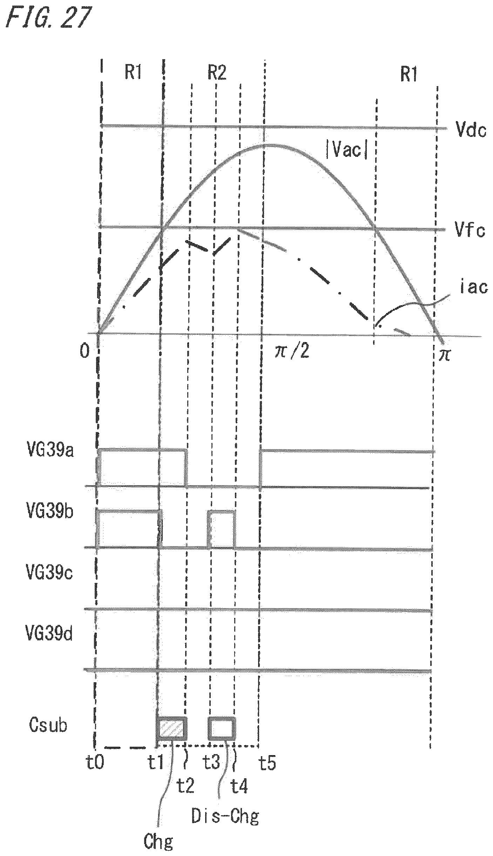

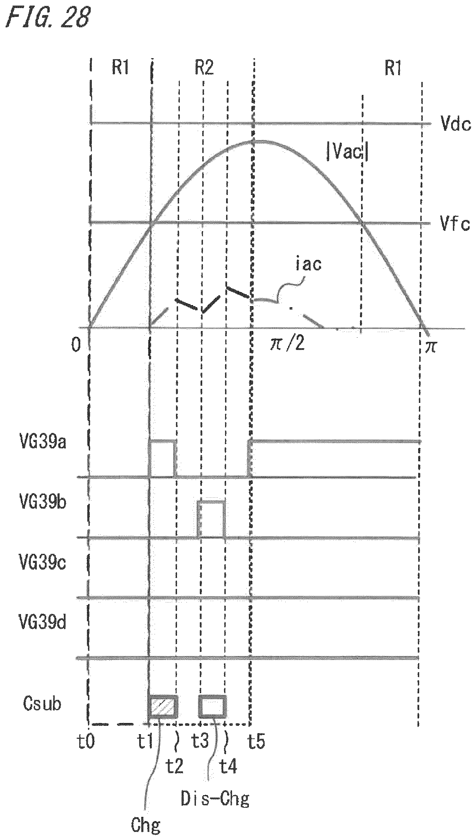

FIG. 27 and FIG. 28 show main operation waveforms in the simple SW step-up operation and switching patterns in the respective operation ranges.

In the simple SW step-up control, switching is performed only several times in the half AC cycle. Thus, the number of times of switching is smaller than in the continuous SW control and therefore the power factor is reduced but loss due to high-frequency driving can be significantly reduced.

In the simple SW step-up control, it is possible to select between operation of performing switching and operation of not performing switching in the operation range R1, in accordance with the conditions of the input power and the power factor. FIG. 27 shows operation in the case of performing switching in the operation range R1, and FIG. 28 shows operation in the case of not performing switching in the operation range R1.

In a case where power is small, the power factor can be ensured sufficiently with switching in only the operation range R2, but in a case where power is increased, performing switching in only the operation range R2 increases a current peak, leading to reduction in the power factor and increase in loss.

Also in the simple SW step-up control, in the positive half cycle, the semiconductor switching elements 39a and 39b in the upper arm of the multilevel driving leg 39 perform switching, and the semiconductor switching elements 39c and 39d in the lower arm are operated so that the parallel diodes conduct current. In the negative half cycle, operations of the semiconductor switching elements 39a and 39b in the upper arm and operations of the semiconductor switching elements 39c and 39d in the lower arm are inverted with each other relative to the case of the positive half cycle. The semiconductor switching element may be turned ON when the parallel diode conducts current, to perform synchronous rectification operation.

In the simple SW step-up control, operation is performed in the operation range R1 and the operation range R2 so as to turn ON each gate signal during such an ON time that the output voltage VDC follows the command value with the number of times of switching designated by a user. After switching is performed the designated number of times, a path connecting the AC power supply 1 and the load 7 is formed so that charging and discharging do not occur in the second capacitor 4, whereby free resonant operation is performed between the reactor 2 and the first capacitor 6.

The patterns of the gate signals shown in FIG. 27 and FIG. 28 are merely an example. The patterns may be set such that, while the respective elements perform switching once, the reactor 2 is excited and neutralized twice and charging and discharging of the second capacitor 4 are each performed once, without being limited to the patterns shown in FIG. 27 and FIG. 28. The number of times of switching set by a user may be any number. As the number of times of switching increases, the power factor comes close to "1" but circuit loss increases, thus having a trade-off relationship.

Next, operation of the controller 40 according to Embodiment 5 will be described. In Embodiment 5, components denoted by the reference characters corresponding to those in Embodiment 1 perform the same operations, and therefore the description thereof is omitted.

In Embodiment 5, a step-down condition is not present, unlike Embodiment 1. Therefore, the voltage command value Vsub* for the second capacitor 4 always satisfies a relationship of Vsub* = Vdc*/2.

In the controller 40, determination for control operation may be performed using the control operation determiner 9 of Embodiment 1 or using the control operation determiner 33 of Embodiment 2.

The main controller 41 is composed of two controllers, i.e., the continuous SW controller 13 and the simple SW step-up controller 14. While performing changeover between the two operations on the basis of the control selection signal SelectSignal (abbreviated as SS in the drawing) outputted from the control operation determiner 9, the main controller 41 generates a duty cycle signal Dutytotal corresponding to each operation and a carrier signal Carrier to be compared with the duty cycle signal Dutytotal, and outputs them to the gate signal generator 16 at the subsequent stage.

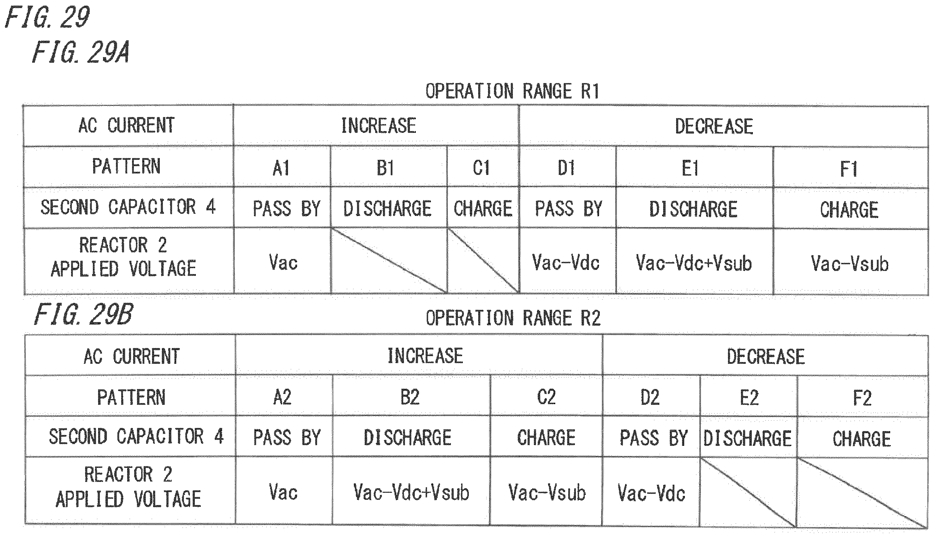

FIG. 29 shows the switching patterns in the respective operation ranges R1 and R2 in Embodiment 5.

In the operation range R1, there are four patterns A1, D1, E1, F1, and in the operation range R2, there are four patterns A2, B2, C2, D2. As in the above Embodiment 1, the theoretical duty cycle DutyPFCFF is calculated according to combination of the switching patterns.

The gate signal generator 42 calculates gate pulses from the duty cycle signal Dutytotal and the carrier signal Carrier through pulse width modulation (PWM) control, and outputs gate signals corresponding to each operation range, to the semiconductor switching elements 39a to 39d of the multilevel driving leg 39.

As described above, in the power conversion device 500 according to Embodiment 5, the semiconductor switching elements of the multilevel driving leg 39 are subjected to ON/OFF control by the controller 40. Thus, as in the above Embodiment 1, it becomes possible to reduce circuit loss over a wider range as compared to the conventional case while employing the second capacitor 4 having a small capacitance as in the conventional case. As compared to Embodiment 1, although step-down operation cannot be performed, the number of components can be decreased, so that cost reduction and loss reduction can be achieved.

Embodiment 6

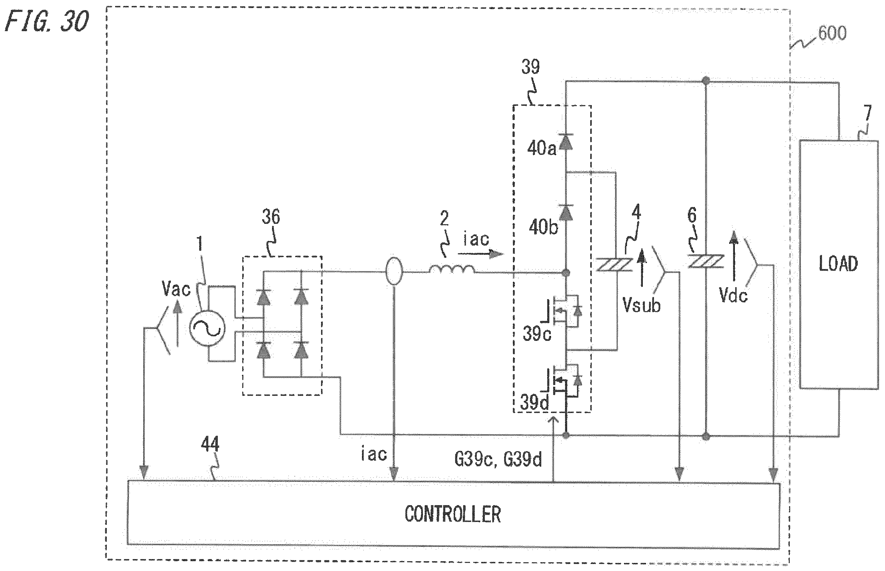

FIG. 30 is a circuit diagram of a power conversion device 600 according to Embodiment 6. The components that correspond to or are the same as those in Embodiment 5 are denoted by the same reference characters.

In the power conversion device 600 of Embodiment 6, the configuration of the main circuit is slightly different from that in Embodiment 5. That is, in Embodiment 6, the main circuit is configured such that, between the AC power supply 1 and the first capacitor 6, the diode bridge 36, the reactor 2, and the multilevel driving leg 39 are connected in this order and the second capacitor 4 is provided.

The multilevel driving leg 39 is configured such that four elements, i.e., a pair of diodes 40a and 40b in the upper arm and a pair of semiconductor switching elements 39c and 39d in the lower arm, are connected in series. The second capacitor 4 is connected between a connection point between the pair of diodes 40a and 40b in the upper arm and a connection point between the pair of semiconductor switching elements 39c and 39d in the lower arm.

The reactor 2 is connected between an upper end of the diode bridge 36 and a middle point of the multilevel driving leg 39. An upper end of the multilevel driving leg 39 is connected to the P-side terminal of the first capacitor 6, and a lower end of the multilevel driving leg 39 is connected to the N-side terminal of the first capacitor 6.

The other components of the main circuit are the same as those in Embodiment 5, and therefore the description thereof is omitted here. The configuration of the controller 44 is the same as that in Embodiment 5. In operation of the controller 44, the gate signals G39c and G39d for the multilevel driving leg 39 are generated on the basis of the inputted load information (voltage information and current information), to perform ON/OFF control of the semiconductor switching elements 39c and 39d. This operation is the same as that in Embodiment 5 and therefore the description thereof is omitted.

As described above, in the power conversion device 600 according to Embodiment 6, the diode bridge 36 is added, whereby the number of the semiconductor switching elements can be decreased as compared to the above Embodiment 5. Thus, the circuit can be configured at comparatively low cost.

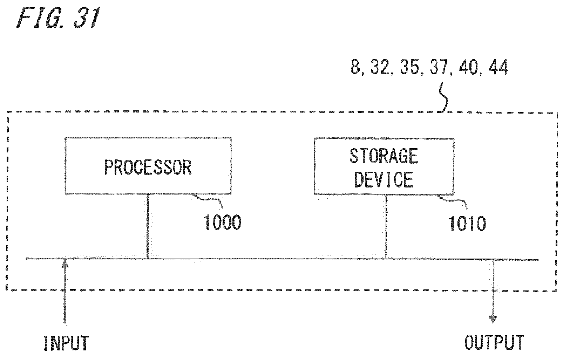

Each controller 8, 32, 35, 37, 40, 44 in the above embodiments is composed of a processor 1000 and a storage device 1010, as shown in FIG. 31 which shows an example of hardware. The storage device 1010 is provided with a volatile storage device such as a random access memory and a nonvolatile auxiliary storage device such as a flash memory, although not shown.

Instead of the flash memory, an auxiliary storage device of a hard disk may be provided. The processor 1000 executes a program inputted from the storage device 1010. In this case, the program is inputted from the auxiliary storage device to the processor 1000 via the volatile storage device. The processor 1000 may output data such as a calculation result to the volatile storage device of the storage device 1010, or may store such data into the auxiliary storage device via the volatile storage device.

Although the invention is described above in terms of various exemplary embodiments and implementations,

## EP 4 270 762 A1

it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

DESCRIPTION OF THE REFERENCE CHARACTERS

100, 200, 300, 400, 500, 600 power conversion device

1 AC power supply

2 reactor

3 single-phase inverter

4 second capacitor

5 single-phase converter

6 first capacitor

7 load

8, 32, 35, 37, 40, 44 controller

3a, 3b, 3c, 3d, 5a, 5b, 5c, 5d, 39a, 39b, 39c, 39d semiconductor switching element

G3a, G3b, G3c, G3d, G5a, G5b, G5c, G5d, G39a, G39b, G39c, G39d gate signal

9, 33 control operation determiner

10 second capacitor voltage command value calculator

11 second capacitor voltage controller

12, 41 main controller

13 continuous SW controller

14 SW step-up controller

15 simple SW step-down controller

16, 42 gate signal generator

17 region determiner

18, 34 SW operation determiner

19 operation-range-R3 cycle calculator

20 Vsubref calculator

21 FFDuty calculator

22 Duty summing unit

23 operation range determiner

24 ON time calculator

25 SW carrier calculator A

26 operation-range-R1 SW carrier calculator A

27 operation-range-R2 SW carrier calculator A

28 SW carrier calculator B

29 operation-range-R1 SW carrier calculator B

30 operation-range-R2 SW carrier calculator B

31 operation-range-R3 SW carrier calculator B

3aa, 3dd, 5aa, 5cc, 5dd, 38a, 38b, 40a, 40b diode

36 diode bridge

38 diode rectification leg

39 multilevel driving leg

1000 processor

1010 storage device

**Claims**

1. A power conversion device comprising:

   at least one reactor, a plurality of switching elements, and a first capacitor, which are provided between an AC power supply and a DC load;
   a second capacitor provided between the reactor and the first capacitor; and
   a controller for controlling switching operations of the switching elements, wherein
   power conversion is performed between AC voltage of the AC power supply and voltage of the first capacitor, and the controller controls the voltage of the first capacitor and voltage of the second capacitor to be predetermined command values, and meanwhile, in accordance with load information regarding the DC load, performs changeover between a first control method in which the switching elements are controlled at a constant switching frequency over an AC cycle of the AC power supply, and a second control method in which the switching elements are controlled at a frequency lower than the switching frequency in the first control method.

2. The power conversion device according to claim 1,

   wherein the controller includes

   a control operation determiner which determines control operation to be performed in the controller, in accordance with the load information,
   a second capacitor voltage command value calculator which calculates a voltage command value for the second capacitor, a second capacitor voltage controller which controls the voltage of the second capacitor to be the voltage command value calculated by the second capacitor voltage command value calculator,

a main controller which performs control operation for the switching elements on the basis of the first control method, and control operation for the switching elements on the basis of the second control method, and

a gate signal generator which generates gate signals for driving the switching elements, from a duty cycle and a carrier signal generated by the controller.

3. The power conversion device according to claim 2,
wherein the main controller is composed of a continuous SW controller which performs step-up operation on the basis of the first control method, a simple SW step-up controller which performs step-up operation on the basis of the second control method, and a simple SW step-down controller which performs step-down operation on the basis of the second control method.

4. The power conversion device according to claim 2 or 3,
wherein he control operation determiner determines control operation to be performed in the main controller, in accordance with input power calculated from the AC voltage and AC current inputted from the AC power supply.

5. The power conversion device according to claim 2 or 3,
wherein the control operation determiner determines control operation to be performed in the main controller, in accordance with output voltage to the DC load.

6. The power conversion device according to claim 2,
wherein the second capacitor voltage command value calculator determines the voltage command value for the second capacitor on the basis of a voltage command value for the first capacitor and the AC voltage inputted from the AC power supply.

7. The power conversion device according to claim 6,
wherein the second capacitor voltage command value calculator determines the voltage command value for the second capacitor so that a time during which the AC voltage is not less than the voltage of the first capacitor and a time during which the AC voltage is not greater than the voltage of the first capacitor and not less than the voltage of the second capacitor, coincide with each other in half the AC cycle, in a condition in which the voltage command value for the first capacitor is not greater than a peak value of the AC voltage.

8. The power conversion device according to claim 3,
wherein in a case of performing step-up operation on the basis of the second control method, the simple SW step-up controller determines, in accordance with input power calculated from the AC voltage and AC current inputted from the AC power supply, whether to use operation of performing switching or operation of not performing switching in a range in which the AC voltage is not greater than the voltage of the second capacitor.

9. The power conversion device according to claim 3,
wherein in a case of performing step-up operation on the basis of the second control method, the simple SW step-up controller changes a number of times of switching on the basis of a power factor and input power of the AC power supply.

10. The power conversion device according to claim 3,
in a case of performing step-up operation on the basis of the second control method, the simple SW step-up controller changes a timing of starting switching, on the basis of a power factor of the AC power supply, in a range in which the AC voltage of the AC power supply is not less than the voltage of the second capacitor.

11. The power conversion device according to claim 3,
wherein in a case of performing step-down operation on the basis of the second control method, the simple SW step-down controller determines, in accordance with the voltage of the first capacitor, whether to use operation of performing switching or operation of not performing switching in a range in which the AC voltage of the AC power supply is not greater than the voltage of the second capacitor.

12. The power conversion device according to claim 3,
wherein in a case of performing step-down operation on the basis of the second control method, the simple SW step-down controller changes a number of times of switching on the basis of a power factor and input power of the

AC power supply.

FIG. 1

EP 4 270 762 A1

*FIG. 2*

*FIG. 3A*

*FIG. 3B*

EP 4 270 762 A1

*FIG. 4*

23

*FIG. 5*

*FIG. 6*

*FIG. 7*

EP 4 270 762 A1

*FIG. 8*

27

FIG. 9

*FIG. 10*

OPERATION-RANGE-R3 CYCLE CALCULATOR — 19

Vdc*
Vac

T3

$\div$ 2

Vsubref CALCULATOR — 20

Vsubref

Vsubref > Vac/2

MUX

Vac/2

STEP UP OR STEP DOWN

MUX

Vdc*/2

Vsub*

10

FIG. 11

FIG. 12

EP 4 270 762 A1

## FIG. 13A

OPERATION RANGE R1

| AC CURRENT | INCREASE | | | DECREASE | | |
|---|---|---|---|---|---|---|
| PATTERN | A1 | B1 | C1 | D1 | E1 | F1 |
| SECOND CAPACITOR 4 | PASS BY | DISCHARGE | CHARGE | PASS BY | DISCHARGE | CHARGE |
| REACTOR 2 APPLIED VOLTAGE | Vac | Vac+Vsub | | Vac-Vdc | Vac-Vdc+Vsub | Vac-Vsub Vac-Vdc-Vsub |

## FIG. 13B

OPERATION RANGE R2

| AC CURRENT | INCREASE | | | DECREASE | | |
|---|---|---|---|---|---|---|
| PATTERN | A2 | B2 | C2 | D2 | E2 | F2 |
| SECOND CAPACITOR 4 | PASS BY | DISCHARGE | CHARGE | PASS BY | DISCHARGE | CHARGE |
| REACTOR 2 APPLIED VOLTAGE | Vac | Vac+Vsub Vac-Vdc+Vsub | Vac-Vsub | Vac-Vdc | | Vac-Vdc-Vsub |

## FIG. 13C

OPERATION RANGE R3

| AC CURRENT | INCREASE | | | DECREASE | | |
|---|---|---|---|---|---|---|
| PATTERN | A3 | B3 | C3 | D3 | E3 | F3 |
| SECOND CAPACITOR 4 | PASS BY | DISCHARGE | CHARGE | PASS BY | DISCHARGE | CHARGE |
| REACTOR 2 APPLIED VOLTAGE | Vac Vac-Vdc | Vac+Vsub Vac-Vdc+Vsub | Vac-Vsub | | | Vac-Vdc-Vsub |

FIG. 14A

FIG. 14B

EP 4 270 762 A1

FIG. 15

## FIG. 16

FIG. 17

EP 4 270 762 A1

*FIG. 18*

FIG. 19

EP 4 270 762 A1

FIG. 20

EP 4 270 762 A1

FIG. 21

FIG. 22

EP 4 270 762 A1

FIG. 23

*FIG. 24*

*FIG. 25*

*FIG. 26*

EP 4 270 762 A1

FIG. 27

46

*FIG. 28*

*FIG. 29*

*FIG. 29A*

OPERATION RANGE R1

| AC CURRENT | INCREASE | | | DECREASE | | |
|---|---|---|---|---|---|---|
| PATTERN | A1 | B1 | C1 | D1 | E1 | F1 |
| SECOND CAPACITOR 4 | PASS BY | DISCHARGE | CHARGE | PASS BY | DISCHARGE | CHARGE |
| REACTOR 2 APPLIED VOLTAGE | Vac | | | Vac−Vdc | Vac−Vdc+Vsub | Vac−Vsub |

*FIG. 29B*

OPERATION RANGE R2

| AC CURRENT | INCREASE | | | DECREASE | | |
|---|---|---|---|---|---|---|
| PATTERN | A2 | B2 | C2 | D2 | E2 | F2 |
| SECOND CAPACITOR 4 | PASS BY | DISCHARGE | CHARGE | PASS BY | DISCHARGE | CHARGE |
| REACTOR 2 APPLIED VOLTAGE | Vac | Vac−Vdc+Vsub | Vac−Vsub | Vac−Vdc | | |

EP 4 270 762 A1

FIG. 30

EP 4 270 762 A1

*FIG. 31*

8, 32, 35, 37, 40, 44

```
┌ ─ ─ ─ ─ ─ ─ ─ ─ ─ ─ ─ ─ ─ ─ ─ ─ ─ ─ ─ ─ ─ ─ ─ ─ ┐
                                                     
│   ┌──────────────┐       ┌──────────────┐        │
    │              │       │   STORAGE    │
│   │  PROCESSOR   │       │    DEVICE    │         │
    │              │       │              │
│   └──────────────┘       └──────────────┘        │
          │     1000              │     1010
│         │                       │                │
 ─ ─ ─ ─ ─┴─ ─ ─ ─ ─ ─ ─ ─ ─ ─ ─ ┴─ ─ ─ ─ ─ ─ ─ ─
│         ↑                               │        │
└ ─ ─ ─ ─ ┼ ─ ─ ─ ─ ─ ─ ─ ─ ─ ─ ─ ─ ─ ─ ─┼─ ─ ─ ─ ┘
          │                               ↓
        INPUT                          OUTPUT
```

## INTERNATIONAL SEARCH REPORT

| International application No. |
|---|
| PCT/JP2020/048176 |

**A. CLASSIFICATION OF SUBJECT MATTER**
Int. Cl. H02M7/12(2006.01)i
FI: H02M7/12 P

According to International Patent Classification (IPC) or to both national classification and IPC

**B. FIELDS SEARCHED**

Minimum documentation searched (classification system followed by classification symbols)
Int. Cl. H02M7/12, 7/48

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2013/035383 A1 (MITSUBISHI ELECTRIC CORP.) 14 | 1, 2, 4-6 |
| A | March 2013 (2013-03-14), paragraphs [0006]-[0046], fig. 1-12, paragraphs [0006]-[0046], fig. 1-12 | 3, 7-12 |
| Y | JP 2003-153543 A (MITSUBISHI ELECTRIC CORP.) 23 | 1, 2, 4-6 |
| A | May 2003 (2003-05-23), abstract, paragraphs [0001]-[0124], fig. 1-15, abstract, paragraphs [0001]-[0124], fig. 1-15 | 3, 7-12 |
| Y | JP 2016-171680 A (JOHNSON CONTROLS-HITACHI AIR | 1, 2, 4-6 |
| A | CONDITIONING TECHNOLOGY (HONG KONG) LTD.) 23 September 2016 (2016-09-23), paragraphs [0101]-[0108], fig. 3, paragraphs [0101]-[0108], fig. 3 | 3, 7-12 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 24.02.2021 | 16.03.2021 |

| Name and mailing address of the ISA/<br>    Japan Patent Office<br>    3-4-3, Kasumigaseki, Chiyoda-ku,<br>    Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2020/048176 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2020-96527 A (HITACHI JOHNSON CONTROLS AIR CONDITIONING INC.) 18 June 2020 (2020-06-18), paragraph [0081], fig. 16, paragraph [0081], fig. 16 | 1, 2, 4-6<br>3, 7-12 |
| A | JP 2013-17346 A (MITSUBISHI ELECTRIC CORP.) 24 January 2013 (2013-01-24), entire text, all drawings | 1-12 |
| A | JP 2009-95159 A (MITSUBISHI ELECTRIC CORP.) 30 April 2009 (2009-04-30), entire text, all drawings | 1-12 |

Form PCT/ISA/210 (continuation of second sheet) (January 2015)

**INTERNATIONAL SEARCH REPORT**

Information on patent family members

| International application No. |
|---|
| PCT/JP2020/048176 |

| Patent Documents referred to in the Report | Publication Date | Patent Family | Publication Date |
|---|---|---|---|
| WO 2013/035383 A1 | 14.03.2013 | US 2014/0233279 A1 paragraphs [0004]-[0100], fig. 1-12 CN 103782500 A | |
| JP 2003-153543 A | 23.05.2003 | (Family: none) | |
| JP 2016-171680 A | 23.09.2016 | (Family: none) | |
| JP 2020-96527 A | 18.06.2020 | (Family: none) | |
| JP 2013-17346 A | 24.01.2013 | US 2013/0336028 A1 entire text, all drawings WO 2013/005457 A1 CN 103493353 A | |
| JP 2009-95159 A | 30.04.2009 | (Family: none) | |

Form PCT/ISA/210 (patent family annex) (January 2015)

**REFERENCES CITED IN THE DESCRIPTION**

**Patent documents cited in the description**

- JP 6129450 B